(19) **Europäisches Patentamt / European Patent Office / Office européen des brevets**

(11) **EP 4 510 698 A1**

(12) **EUROPEAN PATENT APPLICATION**
published in accordance with Art. 153(4) EPC

(43) Date of publication:
**19.02.2025 Bulletin 2025/08**

(21) Application number: **23802606.6**

(22) Date of filing: **20.04.2023**

(51) International Patent Classification (IPC):
**H04W 28/26** (2009.01)

(52) Cooperative Patent Classification (CPC):
**H04L 5/00; H04W 28/26**

(86) International application number:
**PCT/CN2023/089485**

(87) International publication number:
**WO 2023/216831 (16.11.2023 Gazette 2023/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.05.2022 CN 202210524035**

(71) Applicant: **Huawei Technologies Co., Ltd.
Shenzhen, Guangdong 518129 (CN)**

(72) Inventors:
• **WANG, Xiaolu
Shenzhen, Guangdong 518129 (CN)**
• **LI, Rong
Shenzhen, Guangdong 518129 (CN)**

• **HUANGFU, Yourui
Shenzhen, Guangdong 518129 (CN)**
• **QIAO, Yunfei
Shenzhen, Guangdong 518129 (CN)**
• **LUO, Hejia
Shenzhen, Guangdong 518129 (CN)**
• **YU, Tianhang
Shenzhen, Guangdong 518129 (CN)**
• **CHEN, Ying
Shenzhen, Guangdong 518129 (CN)**
• **WANG, Jun
Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **COMMUNICATION METHOD AND COMMUNICATION APPARATUS**

(57) A communication method and a communication apparatus are provided. The method includes: A first device receives first information, determines a target TR pattern based on the first information, and sends information or demodulates received information based on the target TR pattern, where the target TR pattern is a sub-pattern of a longest TR pattern, and the longest TR pattern includes a set of sub-carriers used as reserved tones. The longest TR pattern may include a plurality of TR sub-patterns of different lengths. For example, a first TR pattern of a first length is a sub-pattern of the longest TR pattern, and a second TR pattern of a second length is also a subset of the longest TR pattern. The TR sub-patterns of different lengths may correspond to different carrier bandwidths or quantities of RBs. In this way, the device can select a TR pattern of an appropriate length as the target TR pattern based on the longest TR pattern by only storing the longest TR pattern instead of storing a TR pattern corresponding to each carrier bandwidth or quantity of RBs. This can avoid repeatedly storing a same part of TR patterns of different lengths, and save storage space.

FIG. 4

**Description**

**CROSS-REFERENCE TO RELATED APPLICATIONS**

This application claims priority to Chinese Patent Application No. 202210524035.X, filed with the China National Intellectual Property Administration on May 13, 2022 and entitled "COMMUNICATION METHOD AND COMMUNICATION APPARATUS", which is incorporated herein by reference in its entirety.

**TECHNICAL FIELD**

This application relates to the field of communication technologies, and in particular, to a communication method and a communication apparatus.

**BACKGROUND**

A tone reservation (tone reservation, TR) technology can suppress a peak-to-average power ratio (peak-to-average power ratio, PAPR) of a waveform. That is, a transmitting end reserves some sub-carriers to carry signals for PAPR suppression. A pattern (pattern) formed by numbers of the sub-carriers corresponding to reserved tones for PAPR suppression is referred to as a TR pattern. Different TR patterns are used for different carrier bandwidths, quantities of resource blocks (resource blocks, RBs), or Fourier transform lengths. Currently, a transmitting end and a receiving end store corresponding TR patterns for different carrier bandwidths, quantities of RBs, or Fourier transform lengths. Therefore, a plurality of TR patterns need to be stored, and large storage space is required.

**SUMMARY**

This application provides a communication method and a communication apparatus, to save storage space for storing a TR pattern.

According to a first aspect, an embodiment of this application provides a communication method. The method may be performed by a first device. The first device may be a communication device or a communication apparatus that can support the communication device in implementing functions for the method, for example, a chip system. Descriptions are provided below by using an example in which the communication device is a first device. For example, the first device is a first device, or a chip disposed in the first device, or another component configured to implement a function of the first device.

The communication method includes: The first device receives first information, determines a target TR pattern based on the first information, and sends information or demodulates received information based on the target TR pattern, where the target TR pattern is a sub-pattern of a longest TR pattern, and the longest TR pattern includes a set of sub-carriers used as reserved tones. The longest TR pattern may include a plurality of TR sub-patterns of different lengths. For example, a first TR pattern of a first length is a sub-pattern of the longest TR pattern, and a second TR pattern of a second length is also a subset of the longest TR pattern. The TR sub-patterns of different lengths may correspond to different carrier bandwidths or quantities of RBs. In this way, the device can select a TR pattern of an appropriate length as the target TR pattern based on the longest TR pattern by only storing the longest TR pattern instead of storing a TR pattern corresponding to each carrier bandwidth or quantity of RBs. This can avoid repeatedly storing a same part of TR patterns of different lengths, and save storage space.

In a possible implementation, the sub-carriers in the longest TR pattern are sorted based on PAPR suppression performance. The sub-carriers included in the longest TR pattern are sorted based on the PAPR suppression performance. When the target TR pattern is selected, a TR sub-pattern of a fixed-length is selected starting from a first sub-carrier in the longest TR pattern as the target TR pattern. This can achieve better PAPR suppression performance.

In a possible implementation, the longest TR pattern includes a first TR sub-pattern and a second TR sub-pattern, a first sub-carrier set corresponding to the first TR sub-pattern includes a second sub-carrier set corresponding to the second TR sub-pattern, and a first carrier bandwidth corresponding to the first TR sub-pattern is greater than a second carrier bandwidth corresponding to the second TR sub-pattern. That is, a TR pattern corresponding to a larger carrier bandwidth is an extension of a TR pattern corresponding to a smaller carrier bandwidth. That is, TR patterns corresponding to different carrier bandwidths have a nesting relationship. This saves the storage space, and can provide more TR patterns corresponding to different carrier bandwidths of different sizes.

In a possible implementation, a sub-carrier in the first sub-carrier set other than the second sub-carrier set is located outside the second carrier bandwidth.

In a possible implementation, sub-carriers in the first sub-carrier set other than the second sub-carrier set include a first part of sub-carriers and a second part of sub-carriers, the first part of sub-carriers are located in the second carrier bandwidth, and the second part of sub-carriers are located outside the second carrier bandwidth.

In a possible implementation, the first information indicates a carrier bandwidth used by the first device, and that the first device determines a target TR pattern based on the first information includes: The first device determines a length L of the target TR pattern based on a mapping relationship between a quantity of RBs and a TR pattern and a quantity of RBs corresponding to the carrier bandwidth; and determines the target TR pattern based on the length L and the longest TR pattern. The mapping relationship between a quantity of RBs and a TR pattern length may be predefined, so that the first device can determine the length of the target TR pattern based on the used carrier bandwidth, and further determine the target TR pattern from the longest TR pattern.

In a possible implementation, that the first device determines a length L of the target TR pattern further includes: The first device further determines the length L based on a requirement on the PAPR suppression performance. When determining the target TR pattern based on the predefined longest TR pattern, the first device may further determine the target TR pattern based on the requirement on the PAPR suppression performance. That is, because the longest TR pattern includes the TR sub-patterns of a plurality of different lengths, PAPR suppression can be controlled more flexibly.

In a possible implementation, the first information indicates a length L of the target TR pattern, and that the first device determines a target TR pattern based on the first information includes: The first device determines the target TR pattern based on the length L and the longest TR pattern. A second device may determine the target TR pattern used by the first device. In this case, the second device may directly provide the length of the target TR pattern to the first device, without first determining, by the first device, the length of the to-be-used target TR pattern based on a carrier bandwidth or the like. This reduces processing complexity of the first device.

In a possible implementation, the target TR pattern is first L sub-carriers in the longest TR pattern.

In a possible implementation, the method further includes: The first device sends second information, where the second information indicates the requirement of the first device on the PAPR suppression performance. The first device may report, to the second device, the requirement on the PAPR suppression performance, to assist the second device in determining the length of the target TR pattern with better PAPR suppression performance for the first device.

In a possible implementation, a reference signal is carried in a sub-carrier other than a sub-carrier included in the target TR pattern.

According to a second aspect, an embodiment of this application provides a communication method. The method may be performed by a second device. The second device may be a communication device or a communication apparatus that can support the communication device in implementing functions for the method, for example, a chip system. Descriptions are provided below by using an example in which the communication device is a second device. For example, the second device is a second device, or a chip disposed in the second device, or another component configured to implement a function of the second device.

The communication method includes: The second device determines first information, and sends the first information to a first device, where the first information is used to determine a target TR pattern from a longest TR pattern, the target TR pattern is a sub-pattern of the longest TR pattern, and the longest TR pattern includes a set of sub-carriers used as reserved tones.

In a possible implementation, the sub-carriers in the longest TR pattern are sorted based on PAPR suppression performance.

In a possible implementation, the longest TR pattern includes a first TR sub-pattern and a second TR sub-pattern, a first sub-carrier set corresponding to the first TR sub-pattern includes a second sub-carrier set corresponding to the second TR sub-pattern, and a first carrier bandwidth corresponding to the first TR sub-pattern is larger than a second carrier bandwidth corresponding to the second TR sub-pattern.

In a possible implementation, a sub-carrier in the first sub-carrier set other than the second sub-carrier set is located outside the second carrier bandwidth.

In a possible implementation, sub-carriers in the first sub-carrier set other than the second sub-carrier set include a first part of sub-carriers and a second part of sub-carriers, the first part of sub-carriers are located in the second carrier bandwidth, and the second part of sub-carriers are located outside the second carrier bandwidth.

In a possible implementation, the first information indicates a carrier bandwidth used by the first device, and there is a mapping relationship between a TR pattern length and a quantity of RBs corresponding to the carrier bandwidth.

In a possible implementation, the first information indicates a length L of the target TR pattern.

In a possible implementation, the method further includes: The second device receives second information, and determines the first information based on the second information, where the second information indicates a requirement of the first device on the PAPR suppression performance.

In a possible implementation, a reference signal is carried in a sub-carrier other than a sub-carrier included in the target TR pattern.

For technical effect brought by the second aspect and the possible implementations of the second aspect, refer to descriptions of technical effect of the first aspect and the possible implementations of the first aspect.

According to a third aspect, an embodiment of this application provides a communication apparatus. The communication apparatus has a function of implementing behavior in the method embodiment of any one of the first aspect and the second aspect. For beneficial effect, refer to descriptions of the first aspect and the second aspect. Details are not described herein again.

The communication apparatus may be the first terminal device in the first aspect, or the communication apparatus may be an apparatus, for example, a chip or a chip system, that can implement the method provided in the first aspect. In a possible design, the communication apparatus includes a corresponding means (means) or module configured to perform the method in the first aspect. For example, the communication apparatus includes a processing unit (sometimes also referred to as a processing module or a processor) and/or a transceiver unit (sometimes also referred to as a transceiver module or a transceiver). The transceiver unit may include a sending unit and a receiving unit, or may be understood as that the sending unit and the receiving unit are a same functional module. Alternatively, the transceiver unit is also understood as a general term of a sending unit and a receiving unit, and the sending unit and the receiving unit may be different functional modules. These units (modules) may perform a corresponding function in the method example of the first aspect. For details, refer to the detailed descriptions in the method example. Details are not described herein again.

The communication apparatus may be a second device in the second aspect, or the communication apparatus may be an apparatus, for example, a chip or a chip system, that can implement the method provided in the second aspect. In a possible design, the communication apparatus includes a corresponding means (means) or module configured to perform the method in the second aspect. For example, the communication apparatus includes a processing unit (sometimes also referred to as a processing module or a processor) and/or a transceiver unit (sometimes also referred to as a transceiver module or a transceiver). The transceiver unit may include a sending unit and a receiving unit, or may be understood as that the sending unit and the receiving unit are a same functional module. Alternatively, the transceiver unit is also understood as a general term of a sending unit and a receiving unit, and the sending unit and the receiving unit may be different functional modules. These units (modules) may perform a corresponding function in the method example of the second aspect. For details, refer to the detailed descriptions in the method example. Details are not described herein again.

According to a fourth aspect, an embodiment of this application provides a communication apparatus. The communication apparatus may be the communication apparatus in any one of the third aspect and the fourth aspect, or a chip, or a chip system disposed in the communication apparatus in any one of the third aspect and the fourth aspect. The communication apparatus may be a first device or a second device. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the first device or the second device in the foregoing methods.

According to a fifth aspect, an embodiment of this application provides a communication apparatus. The communication apparatus includes an input/output interface and a logic circuit. The input/output interface is configured to input and/or output information. The logic circuit is configured to perform the method according to any one of the first aspect and the second aspect.

According to a sixth aspect, an embodiment of this application provides a chip system. The chip system includes a processor, and may further include a memory and/or a communication interface, configured to implement the method in any one of the first aspect and the second aspect. In a possible implementation, the chip system further includes the memory, configured to store a computer program. The chip system may include a chip, or may include a chip and another discrete component.

According to a seventh aspect, an embodiment of this application provides a communication system. The communication system includes a first device and a second device, the first device is configured to perform the method performed by the first device in the first aspect, and the second device is configured to perform the method performed by the second device in the second aspect. Certainly, the communication system may include more first devices or more second devices.

According to an eighth aspect, this application provides a computer-readable storage medium. The computer-readable storage medium stores a computer program. When the computer program is run, the method in any one of the first aspect and the second aspect is implemented.

According to a ninth aspect, a computer program product is provided. The computer program product includes computer program code. When the computer program code is run, the method in any one of the first aspect and the second aspect is performed.

For beneficial effect of the third aspect to the ninth aspect and the implementations of the third aspect to the ninth aspect, refer to descriptions of beneficial effect of the first aspect and the second aspect and the implementations of the first aspect and the second aspect.

**BRIEF DESCRIPTION OF DRAWINGS**

FIG. 1 is a diagram of an architecture of a communication system to which an embodiment of this application is applicable;

FIG. 2 is a diagram of an architecture of another communication system to which an embodiment of this application is applicable;

FIG. 3 is a diagram of an architecture of still another communication system to which an embodiment of this application is applicable;

FIG. 4 is a schematic flowchart of a communication method according to an embodiment of this application;

FIG. 5 is a diagram of mapping between carrier bandwidths and TR patterns according to an embodiment of this application;

FIG. 6 is diagram of another mapping between carrier bandwidths and TR patterns according to an embodiment of this application;

FIG. 7 is a diagram of determining a target TR pattern according to an embodiment of this application;

FIG. 8 is a diagram of a relationship between a TR pattern length and PAPR suppression performance according to an embodiment of this application;

FIG. 9 is a diagram of a relationship between TR patterns of different lengths and PAPR suppression performance according to an embodiment of this application;

FIG. 10 is a diagram of mapping between PAPR suppression performance and a TR pattern according to an embodiment of this application;

FIG. 11 is a diagram of another mapping between PAPR suppression performance and a TR pattern according to an embodiment of this application;

FIG. 12 is a diagram of a structure of a communication apparatus according to an embodiment of this application; and

FIG. 13 is a diagram of another structure of a communication apparatus to which an embodiment of this application is applicable.

**DESCRIPTION OF EMBODIMENTS**

Technical solutions provided in embodiments of this application are applied to a 5th generation (5th generation, 5G) mobile communication system, for example, a new radio (new radio, NR) system, or applied to a long term evolution (Long term evolution, LTE) system or a non-terrestrial network (non-terrestrial network, NTN) system, or applied to a next generation mobile communication system or another similar communication system. The technical solutions provided in embodiments of this application are further applied to a vehicle to everything (vehicle to everything, V2X) system, an internet of things (internet of things, IoT) system, a narrowband internet of things (narrowband internet of things, NB-IoT) system, or the like, for example, a wireless fidelity (wireless fidelity, Wi-Fi)-based IoT network or a wearable Wi-Fi network.

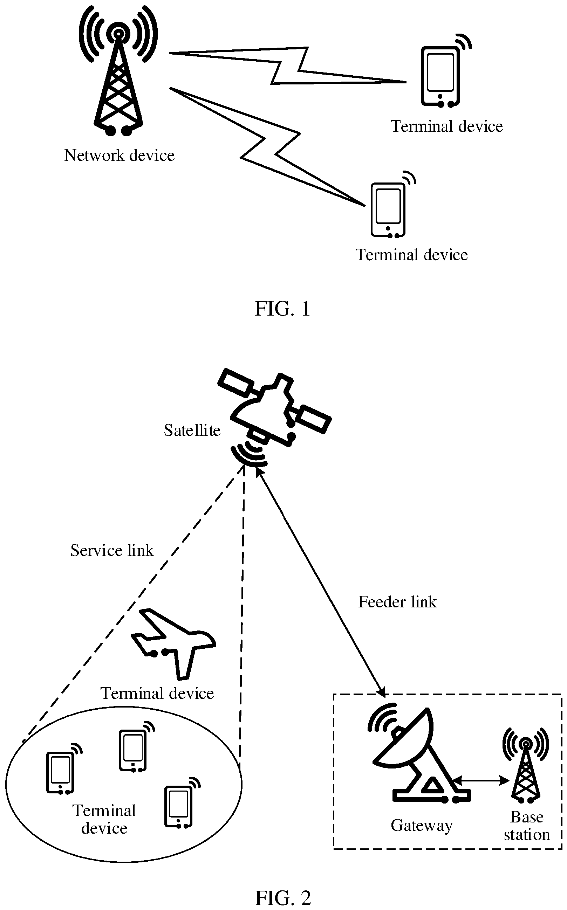

In an example, FIG. 1 is a diagram of a network architecture of a communication system to which an embodiment of this application is applicable. The communication system may include a network device and two terminal devices. The two terminal devices may be mobile terminal devices and/or any other appropriate devices configured to perform communication in a wireless communication system, and both may be connected to the network device. Both the two terminal devices can communicate with the network device. Certainly, a quantity of terminal devices in FIG. 1 is merely an example. There may be fewer or more terminal devices. In addition, the terminal device in FIG. 1 is also an example. For example, the terminal device may be an internet of things device like a smart water meter.

In embodiments of this application, the terminal device is a device with a wireless transceiver function, and may send a signal to the network device, or receive a signal from the network device. The terminal device may include user equipment (user equipment, UE), and is sometimes also referred to as a terminal, an access station, a UE station, a remote station, a wireless communication device, a user apparatus, or the like. The terminal device is configured to connect people, things, machines, and the like, and may be widely used in various scenarios, for example, including but not limited to the following scenarios: cellular communication, device to device (device to device, D2D), V2X, machine-to-machine/machine-type communications (machine-to-machine /machine-type communications, M2M/MTC), IoT, virtual reality (virtual reality, VR), augmented reality (augmented reality, AR), industrial control (industrial control), self-driving (self-driving), telemedicine (remote medical), a smart grid (smart grid), smart furniture, a smart office, and terminal devices in scenarios such as smart wearables, smart transportation, a smart city (smart city), an uncrewed aerial vehicle, and a robot.

By way of example, and not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. If the various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board units, OBUs). The terminal device in this application may alternatively be a vehicle-mounted module, a vehicle-mounted component, a vehicle-mounted part, a vehicle-mounted chip, or a vehicle-mounted unit that is built in a vehicle as one or more parts or units. The vehicle uses the vehicle-mounted module, the vehicle-mounted component, the vehicle-mounted part, the vehicle-mounted chip, or the vehicle-mounted unit that is built in the vehicle, to implement a method in this application.

In embodiments of this application, a communication apparatus configured to implement a function of the terminal device may be a terminal device, or may be an apparatus that can support the terminal device in implementing the function, for example, a chip system. The apparatus may be installed in the terminal device. In the technical solutions provided in embodiments of this application, an example in which the apparatus configured to implement the function of the terminal device is the terminal device is used to describe the technical solutions provided in embodiments of this application.

In embodiments of this application, the network device is an access device through which the terminal device accesses a mobile communication system in a wireless manner, and includes, for example, an access network (access network, AN) device, for example, a base station. Alternatively, the network device may be a device that communicates with the terminal device over an air interface. The network device may include an evolved NodeB (evolved NodeB) (also referred to as an eNB or an e-NodeB for short) in an LTE system or a long term evolution-advanced (long term evolution-advanced, LTE-A) system. The network device may alternatively include a next generation NodeB (next generation NodeB, gNB) in a 5G NR system. The network device may alternatively include an access node or the like in a wireless-fidelity (wireless-fidelity, Wi-Fi) system. The network device may alternatively be a station (station), a relay station, a vehicle-mounted device, a future evolved public land mobile network (Public Land Mobile Network, PLMN) device, a device in a D2D network, a device in a machine-to-machine (machine to machine, M2M) network, a device in an internet of things IoT network, a network device in a PLMN network, or the like. A specific technology and a specific device form that are used by the network device are not limited in embodiments of this application.

In addition, a base station in embodiments of this application may include a central unit (central unit, CU) and a distributed unit (distributed unit, DU), and a plurality of DUs may be centrally controlled by one CU. The CU and the DU may be divided based on a protocol layer function that the CU and the DU each have in a wireless network. For example, functions of a packet data convergence protocol (packet data convergence protocol, PDCP) layer and a protocol layer above the packet data convergence protocol layer are set on the CU, and functions of protocol layers below the PDCP layer, for example, a radio link control (radio link control, RLC) layer and a medium access control (medium access control, MAC) layer, are set on the DU. It should be noted that division into the protocol layers is merely an example, and there may be other division of protocol layers. A radio frequency apparatus may be remotely deployed and not placed in the DU, or may be integrated into the DU, or may be partially remotely disposed and partially integrated into the DU. This is not limited in embodiments of this application. In addition, in some embodiments, a control plane (control plane, CP) and a user plane (user plane, UP) of the CU may be separated into different entities for implementation, where the entities are respectively a control-plane CU entity (CU-CP entity) and a user-plane CU entity (CU-UP entity). The control plane CU-CP of the CU further includes a further split architecture, that is, an existing CU-CP is further split into a CU-CP 1 and a CU-CP 2. The CU-CP 1 includes various radio resource management functions, and the CU-CP 2 includes only an RRC function and a PDCP-C function (that is, a basic function of control plane signaling at a PDCP layer). In the network architecture, signaling generated by the CU may be sent to the terminal device through the DU, or signaling generated by UE may be sent to the CU through the DU. The DU may directly transparently transmit the signaling to the UE or the CU through protocol layer encapsulation without parsing the signaling. In the network architecture, the CU is classified as a network device on a radio access network (radio access network, RAN) side. In addition, the CU may alternatively be classified as a network device on a core network (core network, CN) side. This is not limited in this application.

In embodiments of this application, a communication apparatus configured to implement a function of the network device may be a network device, or may be an apparatus that can support the network device in implementing the function, for example, a chip system. The apparatus may be installed in the network device. In the technical solutions provided in embodiments of this application, an example in which the apparatus configured to implement the function of the network device is the network device is used to describe the technical solutions provided in embodiments of this application.

In another example, FIG. 2 is a diagram of a network architecture of another communication system to which an embodiment of this application is applicable. The communication system includes a satellite, terminal devices, and a gateway. The satellite may be a highly elliptical orbiting (highly elliptical orbiting, HEO) satellite, a geosynchronous earth orbit (geosynchronous earth orbit, GEO) satellite, a medium earth orbit (medium earth orbit, MEO) satellite, and a low-earth orbit (low-earth orbit, LEO) satellite. In addition, an NTN system may further include a high-altitude platform station (high-altitude platform station, HAPS) and the like. This is not limited herein. The gateway (or referred to as a ground station, an earth station, a signal gateway station, or a gateway station) (gateway) may be used to connect the satellite and a terrestrial base station gateway station/signal gateway (gateway) station. One or more satellites may be connected to one or more terrestrial base stations via one or more gateways. This is not limited herein. The terminal devices include, for example, mobile phones, an airplane, and the like (these are used as examples in FIG. 2). A link between the satellite and the terminal device is referred to as a service link (service link), and a link between the satellite and the gateway is referred to as a feeder link (feeder link).

An operating mode of the satellite is not limited in this embodiment of this application. For example, the operating mode of the satellite may be a transparent (transparent) transmission mode, or a regenerative (regenerative) mode.

In the transparent transmission mode, the satellite, as an analog radio frequency repeater, has a relay forwarding function, can implement radio frequency conversion and amplification, and can transparently transmit or copy a signal between the base station and the terminal device. For example, a signal sent by the terminal device may be transparently transmitted via the satellite and forwarded by the gateway to the terrestrial base station. The gateway has some or all functions of a base station. In this case, the gateway may be considered as a base station. It may be considered that a network element and the base station may be deployed together or separately. If the gateway and the base station are separately deployed, a delay of the feeder link includes a delay from the satellite to the gateway and a delay from the gateway to the base station.

In the regenerative mode, the satellite, as a base station for wireless communication, has some or all functions of the base station, implements regeneration of signals received from the ground, and may understand and process these signals. For example, the satellite may be a base station carried on an artificial earth satellite or a high-altitude aircraft. For example, the base station may be an evolved NodeB (eNB) or a 5G base station (gNB). The gateway may forward signaling between the satellite (namely, the base station) and a core network.

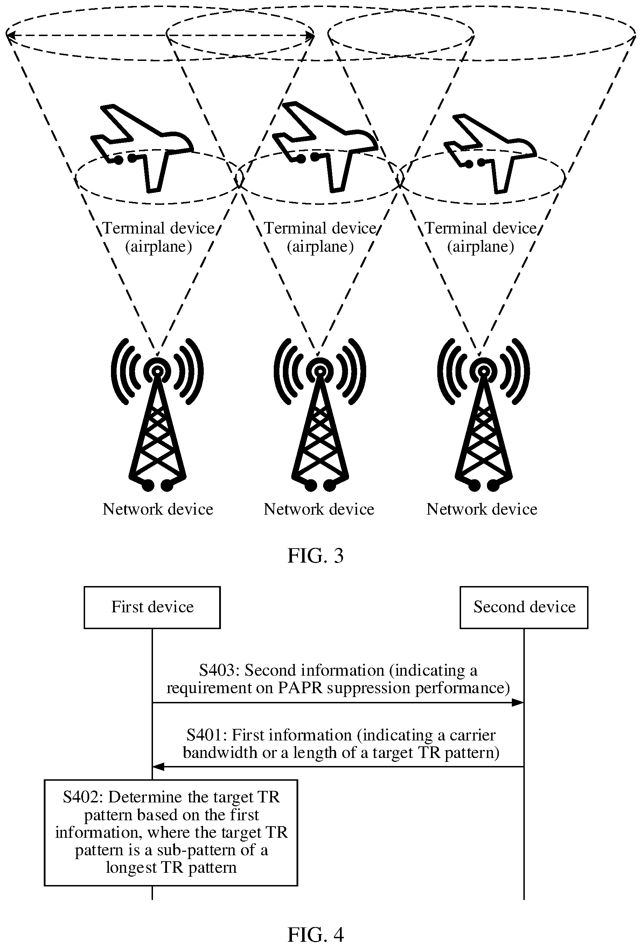

It may be understood that embodiments of this application are also applicable to an air-to-ground (air-to-ground, ATG) communication system. For example, FIG. 3 is a diagram of a network architecture of still another communication system to which an embodiment of this application is applicable. The communication system includes at least one network device and at least one high-altitude terminal device, like a high-altitude airplane and an on-board terminal device.

In embodiments of this application, unless otherwise specified, a quantity of nouns indicates "a singular noun or a plural noun", namely, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof refers to any combination of these items, including any combination of singular items (pieces) or plural items (pieces). For example, at least one of a, b, or c indicates a, b, c, a and b, a and c, b and c, or a, b, and c, where a, b, and c may be singular or plural.

Ordinal numerals such as "first" and "second" in embodiments of this application are used to distinguish between a plurality of objects, and are not intended to limit sizes, content, a sequence, a time sequence, application scenarios, priorities, or importance of the plurality of objects. For example, a first TR pattern and a second TR pattern may be a same TR pattern, or may be different TR patterns. In addition, the names do not indicate that the two TR patterns are different in sizes, content, priorities, application scenarios, importance, or the like.

The foregoing describes the communication systems to which embodiments of this application are applicable. The following describes related technical content mainly related to embodiments of this application.

A satellite data processing capability and transmit power of a satellite device are limited due to manufacturing and transmission costs. Specifically, the satellite device is an energy and power limited device, and is sensitive to satellite power efficiency, that is, power efficiency of the satellite device is expected to be improved as much as possible. In both terrestrial cellular network communication and NTN communication, it is required that a high power amplifier (high power amplifier, HPA) at a transmitting end operate near a linear saturation region, to improve power efficiency of the HPA.

If a system performs data transmission through an orthogonal frequency division multiplexing (orthogonal frequency division multiplexing, OFDM) waveform or a waveform with a high PAPR characteristic, a high PAPR occurs. Because a PAPR of an OFDM signal is high, when the HPA operates near a saturation point, there is a specific probability that the signal input to the HPA enters a non-linear region, and non-linear distortion is generated. Non-linear distortion introduces in-band distortion and out-of-band radiation, which affects decoding accuracy of a receiving end and causes interference to a user on an adjacent channel. Therefore, power back-off can be performed on the signal input to the HPA to minimize non-linear distortion of the HPA. Performing power back-off on the signal input to the HPA may be understood as reducing power of the signal input to the HPA. Although power back-off performed on the signal input to the HPA may reduce non-linear distortion of the HPA, power of a signal output by the HPA is reduced. This reduces transmit power and power efficiency of the HPA, and further reduces signal receiving power of the receiving end and reduces a signal-to-noise ratio of the receiving end. Therefore, a TR technology is proposed to suppress the PAPR corresponding to the OFDM waveform. The TR technology may be understood as that some reserved tones are reserved as tones for PAPR suppression. The reserved tones for PAPR suppression may include a plurality of sub-carriers, which are also referred to as a tone set. A pattern (pattern) formed by sub-carrier numbers corresponding to the sub-carriers included in the tone set is referred to as a TR pattern. That is, a TR pattern may indicate a set of reserved tones for PAPR suppression.

It may be understood that the reserved tones for PAPR suppression are reserved at the transmitting end to carry signals for PAPR suppression, and some tones except the reserved tones are used to carry data signals. Certainly, to improve spectral efficiency, a data signal may also be carried on the reserved tone, that is, the reserved tone may carry both the signal for PAPR suppression and the data signal. Optionally, the tone set carrying the signals for PAPR suppression does not overlap a tone set carrying the data signals (this is used as an example in this specification). When demodulating information received from the transmitting end, the receiving end may skip or remove the reserved tones for PAPR suppression, that is, may not decode the signals on the reserved tones for PAPR suppression. A principle of PAPR suppression based on the TR pattern is the conventional technology, and details are not described herein.

Different TR patterns are used for different carrier bandwidths, quantities of RBs, or Fourier transform lengths. Currently, corresponding TR patterns need to be stored for different carrier bandwidths, quantities of RBs, or Fourier transform lengths. Therefore, the transmitting end and the receiving end need to store a large quantity of TR patterns, and large storage space is occupied. In addition, more signaling overheads are required to indicate that a TR pattern is used. For example, a first length corresponds to a first TR pattern, a second length corresponds to a second TR pattern, and the first TR pattern and the second TR pattern are stored at the transmitting end and the receiving end respectively. If the first length is greater than the second length, the first TR pattern includes some sub-carriers included in the second TR pattern. Therefore, some sub-carriers are repeatedly stored, and storage space is wasted. It should be noted that Fourier transform may include fast Fourier transform (fast Fourier transform, FFT), inverse fast Fourier transform (inverse fast Fourier transform, IFFT), discrete Fourier transform (discrete Fourier transform, DFT), and inverse discrete Fourier transform (inverse discrete Fourier transform, IDFT).

In view of this, the solutions in embodiments of this application are provided. Embodiments of this application provide a longest TR pattern. A TR pattern corresponding to a carrier bandwidth, a quantity of RBs, or a Fourier transform length is a sub-pattern of the longest TR pattern. For example, the longest TR pattern is stored at a transmitting end and a receiving end. A first TR pattern of a first length is a sub-pattern of the longest TR pattern, and a second TR pattern of a second length is also a subset of the longest TR pattern. A TR pattern of each length belongs to a sub-pattern of the longest TR pattern. Compared with a solution of separately storing the first TR pattern and the second TR pattern, this solution storing only the longest TR pattern can reduce storage space.

The technical solutions provided in embodiments of this application are described below with reference to the accompanying drawings.

Embodiments of this application provide a communication method. The method is applied to any communication system, provided that a transmitting end communicates with a receiving end. In the following descriptions, the communication method is applied to any communication system shown in FIG. 1 to FIG. 3. The communication method provided in embodiments of this application is applied to uplink transmission, or applied to downlink transmission. It should be understood that uplink transmission and downlink transmission are relative. For example, transmission from a first device to a second device is uplink transmission, and transmission from the second device to the first device is downlink transmission. It may be understood that, in downlink transmission, a TR pattern is related to a system bandwidth, and in uplink transmission, the TR pattern is related to a carrier bandwidth used by the first device. It may also be understood that, in uplink transmission, the TR pattern is mapped to the carrier bandwidth used by the first device, and in downlink transmission, the TR pattern is mapped to the system bandwidth. In addition, embodiments of this application are not limited to performing data transmission through an OFDM waveform. For example, data transmission may be performed through a DFT-S-OFDM waveform. That is, DFT precoding is first performed on data, and then data obtained by precoding is mapped to a frequency domain data sub-carrier. Unless otherwise specified, a "carrier bandwidth", a "system bandwidth", and a "cell bandwidth" below can be replaced. In addition, the carrier bandwidth/system bandwidth/cell bandwidth may also be represented by using a quantity of RBs or a quantity of resource elements (resources elements, REs). In embodiments of this application, in each table of the longest TR pattern, odd-numbered rows represent sequence numbers of elements in the TR pattern (which are shown in bold), and even-numbered rows represent numbers of sub-carriers included in the TR pattern.

FIG. 4 is a schematic flowchart of a communication method according to an embodiment of this application. In the following descriptions, an example in which the communication method is performed by a first device and a second device is used. The first device may be a terminal device, and the second device may be a network device.

S401: The first device receives first information sent by the second device, and correspondingly the second device sends the first information to the first device.

The first information may be used by the first device to determine a target TR pattern from a longest TR pattern. The longest TR pattern includes a plurality of TR sub-patterns, and the target TR pattern is one of the plurality of TR sub-patterns. It may be understood that the longest TR pattern includes a set of sub-carriers used as reserved tones. One TR sub-pattern corresponds to one sub-carrier set. The first information is described below, and is not described herein.

The target TR pattern is related to a carrier bandwidth used by the first device, and different carrier bandwidths correspond to different lengths L of the target TR pattern. It should be understood that, for the carrier bandwidth, the target TR pattern is related to a quantity of RBs corresponding to the carrier bandwidth used by the first device, and different quantities of RBs correspond to different lengths L of the target TR pattern. In this embodiment of this application, the carrier bandwidth or the quantity of RBs may be mapped to the TR pattern length L, so that the first device determines the length L of the target TR pattern based on the used carrier bandwidth or quantity of RBs, and then determines the target TR pattern from the longest TR pattern based on the length L. For example, the first device uses a set of first L sub-carriers in the longest TR pattern as the target TR pattern.

Table 1 shows a mapping relationship between a carrier bandwidth and a TR pattern length L. It may be understood that the carrier bandwidth is related to a sub-carrier space (sub-carrier space, SCS). Table 1 shows the mapping relationship between a carrier bandwidth and a TR pattern length L when the SCSs are 60 K and 120 K.

**Table 1**

| Carrier bandwidth (MHz) SCS=120 K | Carrier bandwidth (MHz) SCS=60 K | TR pattern length L |
|---|---|---|
| 50 | 25 | 12 |
| 100 | 50 | 24 |
| 200 | 100 | 48 |
| 400 | 200 | 96 |

It can be seen from Table 1 that, when the sub-carrier space is 120 K and the carrier bandwidth is 50 MHz, the TR pattern length L is 12; when the sub-carrier space is 120 K and the carrier bandwidth is 100 MHz, the TR pattern length L is 24; when the sub-carrier space is 60 K and the carrier bandwidth is 25 MHz, the TR pattern length L is 12; and so on. Therefore, the first device can determine the length L of the target TR pattern based on Table 1 and the used carrier bandwidth. Table 1 may be predefined or preconfigured; or Table 1 may be agreed upon by the first device and the second device. This is not limited in this embodiment of this application. In addition, Table 1 is merely an example. It may be understood that, for different SCSs, carrier bandwidths may be mapped to TR pattern lengths L.

Table 2 shows a mapping relationship between a quantity of RBs and a TR pattern length L.

Table 2

| Quantity of RBs | TR pattern length L |
|---|---|
| 32 | 12 |
| 66 | 24 |
| 132 | 48 |
| 264 | 96 |

It can be seen from Table 2 that, when the quantity of RBs is 32, the TR pattern length L is 12; when the quantity of RBs is 66, the TR pattern length L is 24; and so on. Therefore, the first device can determine the length L of the target TR pattern based on Table 2 and the quantity of RBs corresponding to the used carrier bandwidth or a quantity of RBs of allocated frequency domain resources. Table 2 may be predefined or preconfigured, or may be indicated by the second device; or Table 2 may be agreed upon by the first device and the second device. This is not limited in this embodiment of this application.

In addition, Table 2 is merely an example. It may be understood that the quantity of RBs may be related to a sub-carrier space (sub-carrier space, SCS). For different SCSs, quantities of RBs may be mapped to TR pattern lengths L. For example, refer to Table 3. Table 3 shows a mapping relationship between a quantity of RBs and a TR pattern length L when SCSs are 60 K and 120 K.

**Table 3**

| Quantity of RBs (60 K) | Quantity of RBs (120 K) | TR pattern length L |
|---|---|---|
| 65 | 32 | 12 |
| 135 | 66 | 24 |
| 264 | 132 | 48 |
| - | 264 | 96 |

It can be seen from Table 3 that, when the sub-carrier space is 120 K and the quantity of RBs is 32, the TR pattern length L is 12; when the sub-carrier space is 120 K and the quantity of RBs is 66, the TR pattern length L is 24; when the sub-carrier space is 60 K and the quantity of RBs is 65, the TR pattern length L is 12; and so on. Therefore, the first device can determine the length L of the target TR pattern based on Table 2 and the quantity of RBs corresponding to the used carrier bandwidth. Table 3 may be predefined or preconfigured; or Table 3 may be agreed upon by the first device and the second device. This is not limited in this embodiment of this application. In addition, Table 3 is merely an example.

It may be understood that the carrier bandwidth is related to the quantity of RBs. As an alternative table of Table 1 to Table 3, Table 4 shows a mapping relationship between a carrier bandwidth, a quantity of RBs, and a TR pattern length L. An example in which an SCS is 120 K is used for the carrier bandwidth in Table 4.

Table 4

| Carrier bandwidth (MHz) SCS=120 K | Quantity of RBs | TR pattern length L |
|---|---|---|
| 50 | 32 | 12 |
| 100 | 66 | 24 |
| 200 | 132 | 48 |
| 400 | 264 | 96 |

Table 4 may be predefined or preconfigured, or may be indicated by the second device; or Table 4 may be agreed upon by the first device and the second device. This is not limited in this embodiment of this application. In addition, Table 4 is merely an example. It may be understood that, for different SCSs, quantities of RBs may be mapped to TR pattern lengths L.

In this embodiment of this application, an FFT/IFFT length may also be mapped to a TR pattern length L, so that the length L of the target TR pattern can be determined based on the FFT/IFFT length. For example, Table 5 shows a mapping relationship between an FFT/IFFT length and a TR pattern length L.

**Table 5**

| IFFT/FFT length | TR pattern length L |
|---|---|
| 512 | 12 |
| 1024 | 24 |
| 2048 | 48 |
| 4096 | 96 |

The sub-carriers in the longest TR pattern may be sorted based on PAPR suppression performance. For example, Table 6 shows a longest TR pattern.

**Table 6**

| 1 | 2 | 3 | 4 | 5 | 6 | 7 | 8 | 9 | 10 |
|---|---|---|---|---|---|---|---|---|---|
| 362 | 307 | 5 | 42 | 58 | 340 | 306 | 294 | 67 | 379 |
| **11** | **12** | **13** | **14** | **15** | **16** | **17** | **18** | **19** | **20** |
| 102 | 53 | 646 | 625 | 751 | 720 | 758 | 196 | 396 | 215 |
| **21** | **22** | **23** | **24** | **25** | **26** | **27** | **28** | **29** | **30** |
| 619 | 87 | 183 | 112 | 1488 | 1484 | 1547 | 1100 | 1427 | 1448 |
| **31** | **32** | **33** | **34** | **35** | **36** | **37** | **38** | **39** | **40** |
| 966 | 1358 | 1561 | 1384 | 1571 | 1246 | 1072 | 936 | 1408 | 532 |
| **41** | **42** | **43** | **44** | **45** | **46** | **47** | **48** | **49** | **50** |
| 866 | 55 | 214 | 1582 | 96 | 999 | 1244 | 631 | 3125 | 3167 |
| **51** | **52** | **53** | **54** | **55** | **56** | **57** | **58** | **59** | **60** |
| 3102 | 2229 | 2366 | 1996 | 1910 | 2068 | 2419 | 2361 | 2769 | 2568 |

(continued)

| 61 | 62 | 63 | 64 | 65 | 66 | 67 | 68 | 69 | 70 |
|------|------|------|------|------|------|------|------|------|------|
| 2147 | 2303 | 3147 | 2557 | 2378 | 3121 | 2951 | 2762 | 2032 | 3085 |
| 71 | 72 | 73 | 74 | 75 | 76 | 77 | 78 | 79 | 80 |
| 2685 | 3036 | 3001 | 817 | 1978 | 2211 | 2049 | 2776 | 1076 | 1762 |
| 81 | 82 | 83 | 84 | 85 | 86 | 87 | 88 | 89 | 90 |
| 1946 | 2688 | 2829 | 2917 | 2571 | 2601 | 2540 | 2474 | 1731 | 2944 |
| 91 | 92 | 93 | 94 | 95 | 96 | | | | |
| 2323 | 2967 | 2969 | 1631 | 1710 | 2704 | | | | |

In Table 6, odd-numbered rows represent sequence numbers of elements in the TR pattern (which are shown in bold), and even-numbered rows represent numbers of sub-carriers included in the TR pattern. In Table 6, the sub-carriers are numbered from 1. For example, a 5th element in Table 6 indicates that a number of a reserved sub-carrier is 58, that is, a 5th element in Table 6 indicates that a reserved sub-carrier whose index is a 58th sub-carrier in a carrier bandwidth. It should be noted that a number from which the sub-carriers are numbered is not limited in this embodiment of this application. For example, if it is agreed that the sub-carriers are numbered from 0, the numbers of the sub-carriers in Table 6 may be subtracted by 1. The foregoing example is still used. If the sub-carriers are numbered from 0, the 5th element in Table 6 indicates that a reserved sub-carrier is a sub-carrier whose index is 57 in a carrier bandwidth.

It may be understood that the number of the sub-carrier in Table 6 may be a valid sub-carrier number, that is, the sub-carrier corresponding to a number of the sub-carrier in Table 6 is a sub-carrier other than a guard band. This can avoid complexity caused by different offsets of numbers of sub-carriers in different bandwidths due to the guard band.

Table 6 shows a longest TR pattern. It can be seen from Table 6 that a length of the longest TR pattern is 96. Table 6 may indicate TR patterns of a plurality of lengths, for example, a TR pattern whose length is 12, a TR pattern whose length is 24, a TR pattern whose length is 48, and a TR pattern whose length is 96. The TR patterns of various lengths are sub-patterns of the longest TR pattern. Compared with storing the TR pattern whose length is 12, the TR pattern whose length is 24, the TR pattern whose length is 48, and the TR pattern whose length is 96, storing the TR pattern shown in Table 6 by the first device and the second device can avoid storing a plurality of TR patterns of different lengths, and save storage space.

That the longest TR pattern includes TR sub-patterns of a plurality of lengths may be considered that the longest TR pattern includes TR sub-patterns corresponding to a plurality of bandwidths of different sizes. In addition, a sub-carrier set corresponding to a TR sub-pattern corresponding to a large bandwidth includes a sub-pattern of a TR pattern corresponding to a small bandwidth. For example, the longest TR pattern includes a first TR sub-pattern and a second TR sub-pattern, a first sub-carrier set corresponding to the first TR sub-pattern includes a second sub-carrier set corresponding to the second TR sub-pattern, and a first carrier bandwidth corresponding to the first TR sub-pattern is larger than a second carrier bandwidth corresponding to the second TR sub-pattern. It may also be considered that a TR pattern corresponding to a larger carrier bandwidth is an extension of a TR pattern corresponding to a smaller carrier bandwidth. That is, TR patterns corresponding to different carrier bandwidths have a nesting relationship.

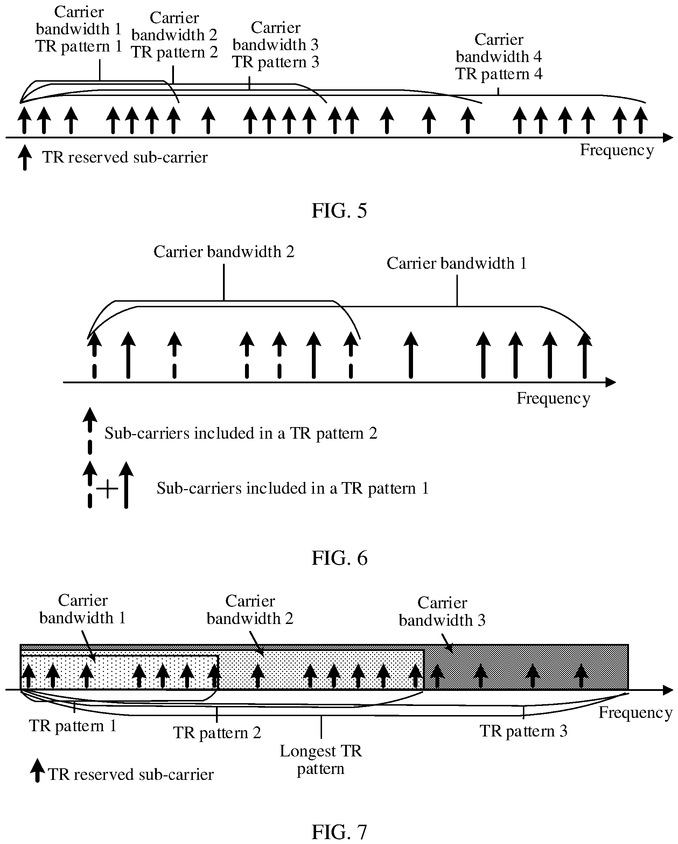

For ease of understanding, FIG. 5 is a diagram of mapping between carrier bandwidths and TR patterns. In FIG. 5, a longest TR pattern is a TR pattern corresponding to a carrier bandwidth 4, namely, a TR pattern 4. It can be seen from FIG. 5 that a carrier bandwidth 1 is smaller than a carrier bandwidth 2, the carrier bandwidth 2 is smaller than a carrier bandwidth 3, and the carrier bandwidth 3 is smaller than the carrier bandwidth 4. Correspondingly, a sub-carrier set corresponding to the TR pattern 4 includes a sub-carrier set corresponding to the TR pattern 3, the sub-carrier set corresponding to the TR pattern 3 includes a sub-carrier set corresponding to the TR pattern 2, and the sub-carrier set corresponding to the TR pattern 2 includes a sub-carrier set corresponding to the TR pattern 1.

It should be noted that, in this embodiment of this application, a specific location of a newly added sub-carrier in a sub-carrier set corresponding to a large carrier bandwidth is not limited relative to a sub-carrier set corresponding to a small carrier bandwidth. For example, a first carrier bandwidth is larger than a second carrier bandwidth, the first carrier bandwidth corresponds to a first sub-carrier set, and the second carrier bandwidth corresponds to a second sub-carrier set. A specific location of a sub-carrier in the first sub-carrier set other than the second sub-carrier set is not limited in this embodiment of this application. For example, the sub-carrier in the first sub-carrier set other than the second sub-carrier set may be located outside the second carrier bandwidth. For another example, sub-carriers in the first sub-carrier set other than the second sub-carrier set may include a first part and a second part, the first part may be located in the second carrier bandwidth, and the second part may be located outside the second carrier bandwidth.

For ease of understanding, FIG. 6 is a diagram of mapping between carrier bandwidths and TR patterns. In FIG. 6, an example in which a TR pattern 1 and a TR pattern 2 are included is used. A TR pattern corresponds to a carrier bandwidth. Dashed-line arrows in FIG. 6 represent sub-carriers included in a sub-carrier set 2 corresponding to the TR pattern 2. Solid-line arrows represent sub-carriers newly added to a sub-carrier set 1 corresponding to the TR pattern 1 relative to the sub-carrier set 2. It can be seen from FIG. 6 that, relative to the sub-carrier set 2, the newly added sub-carriers in the sub-carrier set 1 include sub-carriers located in the carrier bandwidth 2 and sub-carriers outside the carrier bandwidth 2.

It should be noted that a start location of a carrier bandwidth corresponding to each TR sub-pattern in the longest TR pattern is not limited in this embodiment of this application. That is, start locations of carrier bandwidths corresponding to the TR sub-patterns may be the same, or may be different. Similarly, start locations of different TR patterns may be the same, or may be different. In other words, whether numbers of first sub-carriers included in different TR patterns are the same is not limited in this embodiment of this application.

It should be noted that Table 6 is merely an example, and the numbers of the sub-carriers in Table 6 are not limited in this embodiment of this application. It may also be understood that Table 6 is obtained through ordering based on the PAPR suppression performance, and a longest TR pattern similar to that in Table 6 may be obtained through ordering based on the PAPR suppression performance. The longest TR pattern similar to that in Table 6 may be obtained based on Table 6, and may be used as another longest TR pattern to replace that in Table 6. For ease of description, the longest TR pattern in Table 6 is referred to as a first longest TR pattern, and the longest TR pattern that can replace that in Table 6 is referred to as a second longest TR pattern.

In an example, starting from a number 1 of a sub-carrier, a relationship between a number of a sub-carrier in the second longest TR pattern and a number of a sub-carrier in the first longest TR pattern may meet the following condition: reserved_tones_index_new=mod(reserved_tones_index_old+Δk-1, IFFT_length)+1.

Herein, reserved_tones_index_new is the number of the sub-carrier in the second longest TR pattern, reserved_tones_index_old is the number of the sub-carrier in the first longest TR pattern, Δk represents an overall offset value or a cyclic shift value of the first longest TR pattern, and IFFT_length represents a cyclic shift periodicity of the number of the sub-carrier in the second longest TR pattern (related to a carrier bandwidth or related to an IFFT length for generating an OFDM/DFT-s-OFDM signal).

It may be understood that, starting from a number 0 of a sub-carrier, a relationship between a number of a sub-carrier in the second longest TR pattern and a number of a sub-carrier in the first longest TR pattern may meet the following condition:

$$\text{reserved\_tones\_index\_new} = \text{mod}(\text{reserved\_tones\_index\_old} + \Delta k, \text{IFFT\_length}).$$

In another example, the second longest TR pattern may be obtained by performing cyclic shift on a number of a sub-carrier of the first longest TR pattern. For example, a relationship between the number of a sub-carrier in the second longest TR pattern and the number of the sub-carrier in the first longest TR pattern may meet the following condition:

$$\text{reserved\_tones\_index\_new} = \text{circleshift}(\text{reserved\_tones\_index\_old}, \Delta k, \text{IFFT\_length}).$$

Herein, d=circleshift(a, b, c) represents that d is obtained by performing cyclic shift based on a periodicity c after a is offset from a by b.

It may be understood that, if Table 1 to Table 4 are predefined, the first information may indicate the carrier bandwidth used by the first device. In this case, the first device may determine the length L of the target TR pattern based on the carrier bandwidth and Table 1 (or Table 2 or Table 4), and then select first L sub-carriers from Table 6 as the target TR pattern. For example, the first information indicates that the carrier bandwidth used by the first device is 100 MHz (SCS=120 kHz) or the quantity of RBs is 66, and the first device may determine, based on the first information and Table 1, Table 2, or Table 4, that the length L of the target TR pattern is 24. The first device may select the first 24 sub-carriers from Table 6 as the target TR pattern, as shown in Table 7. Alternatively, the first information may indicate that the length L of the target TR pattern is 24, and the first device may select the first 24 sub-carriers from Table 6 as the target TR pattern, as shown in Table 7.

**Table 7**

| 1 | 2 | 3 | 4 | 5 | 6 | 7 | 8 | 9 | 10 |
|-----|-----|-----|-----|-----|-----|-----|-----|-----|-----|
| 362 | 307 | 5 | 42 | 58 | 340 | 306 | 294 | 67 | 379 |
| 11 | 12 | 13 | 14 | 15 | 16 | 17 | 18 | 19 | 20 |
| 102 | 53 | 646 | 625 | 751 | 720 | 758 | 196 | 396 | 215 |

(continued)

| 21 | 22 | 23 | 24 | | | | | | |
|-----|----|-----|-----|--|--|--|--|--|--|
| 619 | 87 | 183 | 112 | | | | | | |

Alternatively, if Table 2, Table 3, or Table 4 is predefined, the first information may indicate the carrier bandwidth used by the first device. In this case, the first device may determine the length L of the target TR pattern based on Table 2 (or Table 3 or Table 4), and the quantity of RBs corresponding to the carrier bandwidth, and then select the first L sub-carriers from Table 6 as the target TR pattern. For example, the first information indicates that the carrier bandwidth used by the first device is 200 MHz, the first device determines, based on the first information, that the quantity of RBs is 132, and may determine, based on Table 2, Table 3, or Table 4, that the length L of the target TR pattern is 78. The first device may select the first 48 sub-carriers from Table 6 as the target TR pattern, as shown in Table 8. Alternatively, the first information may indicate that the length L of the target TR pattern is 48, and the first device may select the first 48 sub-carriers from Table 6 as the target TR pattern, as shown in Table 8.

**Table 8**

| 1 | 2 | 3 | 4 | 5 | 6 | 7 | 8 | 9 | 10 |
|------|------|------|------|------|------|------|------|------|------|
| 362 | 307 | 5 | 42 | 58 | 340 | 306 | 294 | 67 | 379 |
| **11** | **12** | **13** | **14** | **15** | **16** | **17** | **18** | **19** | **20** |
| 102 | 53 | 646 | 625 | 751 | 720 | 758 | 196 | 396 | 215 |
| **21** | **22** | **23** | **24** | **25** | **26** | **27** | **28** | **29** | **30** |
| 619 | 87 | 183 | 112 | 1488 | 1484 | 1547 | 1100 | 1427 | 1448 |
| **31** | **32** | **33** | **34** | **35** | **36** | **37** | **38** | **39** | **40** |
| 966 | 1358 | 1561 | 1384 | 1571 | 1246 | 1072 | 936 | 1408 | 532 |
| **41** | **42** | **43** | **44** | **45** | **46** | **47** | **48** | | |
| 866 | 55 | 214 | 1582 | 96 | 999 | 1244 | 631 | | |

Optionally, if the carrier bandwidth (for example, referred to as a first bandwidth) used by the first device is less than a carrier bandwidth (for example, referred to as a second bandwidth) mapped in Table 1, Table 2, or Table 3, the target TR pattern corresponds to a sub-carrier set A, and the sub-carrier set A may be determined based on a quantity of sub-carriers included in a sub-carrier set B and a sub-carrier set C. The sub-carrier set B is a set of all sub-carriers in the first bandwidth, and the sub-carrier set C is a sub-carrier set corresponding to a TR pattern corresponding to the second bandwidth. Specifically, the first device determines a quantity of occupied sub-carriers Num_subcarrier (for example, a quantity of $12 \times$ RBs) based on the used carrier bandwidth (for example, referred to as the first bandwidth), the quantity of RBs of the bandwidth, or a quantity of RBs of a used frequency domain resource. When sub-carriers in the carrier bandwidth are numbered from 0, the first device selects sub-carriers whose numbers are not greater than (Num_sub-carrier-1) from the sub-carrier set C to form the target TR pattern. That is, a set formed by sub-carriers whose numbers are less than or equal to Num_subcarrier-1 in the sub-carrier set C is used as the target TR pattern. When sub-carriers in the carrier bandwidth are numbered from 1, the first device may select sub-carriers whose numbers are not greater than Num_subcarrier from the sub-carrier set C to form the target TR pattern. That is, a set formed by sub-carriers whose numbers are less than or equal to Num_subcarrier in the sub-carrier set is used as the target TR pattern.

For example, the carrier bandwidth used by the first device is 40 MHz or 25 RBs (for example, referred to as the first bandwidth), and is less than 50 MHz or 32 RBs (for example, referred to as the second bandwidth) in Table 1, Table 2, or Table 4. In this case, a TR pattern whose length is 12 may be determined from Table 6, and a part that is in the TR pattern and that overlaps sub-carriers included in 40 MHz or 25 RBs is used as the target TR pattern. For example, if the bandwidth is 40 MHz or 25 RBs (300 sub-carriers), a part that is in Table 6 and that overlaps first 12 reserved sub-carriers with 25 RBs may be used as the target TR pattern. In Table 6, starting from a number 1 of a sub-carrier, a combination of reserved sub-carrier index numbers of to-be-used TR patterns is obtained based on a condition that reserved tones index≤300, where a sub-carrier set corresponding to the target TR pattern is {5, 42, 58, 294, 67, 102, 53}.

In an alternative solution, Table 1 to Table 5 may not be defined. In this case, an initial TR pattern may be predefined, and the initial TR pattern may be the longest TR pattern, or may be a TR pattern different from the longest TR pattern. For example, a length of the initial TR pattern is less than that of a TR pattern of the longest TR pattern. The first device may use, as the target TR pattern, a set formed by sub-carriers included in the used carrier bandwidth and overlapping sub-carriers in sub-carriers included in the initial TR pattern. For ease of understanding, FIG. 7 shows a manner of determining the target TR pattern. In FIG. 7, an example in which the carrier bandwidth used by the first device is a carrier bandwidth 1, a carrier bandwidth 2, or a carrier bandwidth 3 is used. A set formed by sub-carriers included in the carrier bandwidth 1 and overlapping sub-carriers in a sub-carrier set in the initial TR pattern is a TR pattern 1; a set formed by sub-carriers included in the carrier bandwidth 2 and overlapping sub-carriers in the sub-carrier set in the initial TR pattern is a TR pattern 2; and a set formed by sub-carriers included in the carrier bandwidth 3 and overlapping sub-carriers in the sub-carrier set in the initial TR pattern is the TR pattern 3.

Alternatively, it may be understood that numbers of the sub-carriers included in the initial TR pattern belong to numbers of the sub-carriers included in the carrier bandwidth. When the carrier bandwidth used by the first device is the carrier bandwidth 1, the first device may determine a quantity of occupied sub-carriers Num_subcarrier based on a quantity of RBs corresponding to the carrier bandwidth 1. For example, Num_subcarrier is a quantity of 12×RBs. When sub-carriers in the carrier bandwidth are numbered from 0, the first device may select, from the initial TR pattern, a set formed by sub-carriers whose numbers are not greater than (Num_subcarrier-1) as the target TR pattern. That is, a set formed by sub-carriers whose numbers are less than or equal to Num_subcarrier-1 in the initial TR pattern is used as the target TR pattern, or a set formed by sub-carriers whose numbers are less than or equal to Num_subcarrier in the initial TR pattern is used as the target TR pattern. When sub-carriers in the carrier bandwidth are numbered from 1, the first device may select, from the initial TR pattern, a set formed by sub-carriers whose numbers are not greater than Num_subcarrier as the target TR pattern. That is, a set formed by sub-carriers whose numbers are less than or equal to Num_subcarrier in the initial TR pattern is used as the target TR pattern, or a set formed by sub-carriers whose numbers are less than or equal to Num_subcarrier+1 in the initial TR pattern is used as the target TR pattern.

For ease of understanding, an example in which the initial TR pattern is the longest TR pattern in Table 6 is used. When the carrier bandwidth used by the first device is 100 MHz or 66 RBs, corresponding Num_subcarrier=66*12=792. Starting from the number 1 of the sub-carrier in Table 6, the first device may select, from Table 6, a TR pattern formed by sub-carriers whose numbers are less than or equal to Num_subcarrier as the target TR pattern. That is, the first device selects a sub-carrier set 1 formed by sub-carriers whose numbers are less than or equal to 792 as the target TR pattern. Corresponding to Table 6, it can be learned that the sub-carrier set 1 is {362, 307, 5, 42, 58, 340, 306, 294, 67, 379, 102, 53, 646, 625, 751, 720, 758, 196, 396, 215, 619, 87, 183, 112}. It should be understood that, if the sub-carriers are numbered from 0, the first device selects a TR pattern formed by sub-carriers whose numbers are less than or equal to Num_subcarrier-1 as the target TR pattern. That is, the first device selects a sub-carrier set 2 formed by sub-carriers whose numbers are less than or equal to 791 as the target TR pattern. It should be understood that the sub-carrier set 2 is obtained by subtracting 1 from numbers of sub-carriers in the sub-carrier set 1.

In a possible implementation, the longest TR pattern and the initial TR pattern may be predefined. In this case, the first device may determine a TR pattern, for example, referred to as an initial target TR pattern, from the initial TR pattern based on the used carrier bandwidth or the quantity of RBs. A length of the initial target TR pattern is, for example, L1. The first device may also determine, based on the carrier bandwidth and Table 1, Table 2, or Table 4, a TR pattern whose length is L2. The first device uses an intersection set of the TR pattern whose length is L1 and the TR pattern whose length is L2 as the target TR pattern. For example, the first device determines a TR pattern whose length is 10 from the initial target TR pattern, the first device determines a TR pattern whose length is 12 based on the carrier bandwidth and Table 1, Table 2, or Table 4, and the first device may use first 10 sub-carriers in the TR pattern whose length is 12 as the target TR pattern.

It should be noted that the TR pattern lengths in Table 1 to Table 5 are merely examples, and the TR pattern lengths in Table 1 to Table 5 are not limited in this embodiment of this application. It may be understood that the TR pattern length is related to the PAPR suppression performance, but low spectral efficiency may be caused when the PAPR suppression performance is good. Therefore, in this embodiment of this application, an appropriate TR pattern can be determined in consideration of both the PAPR suppression performance and spectral efficiency.

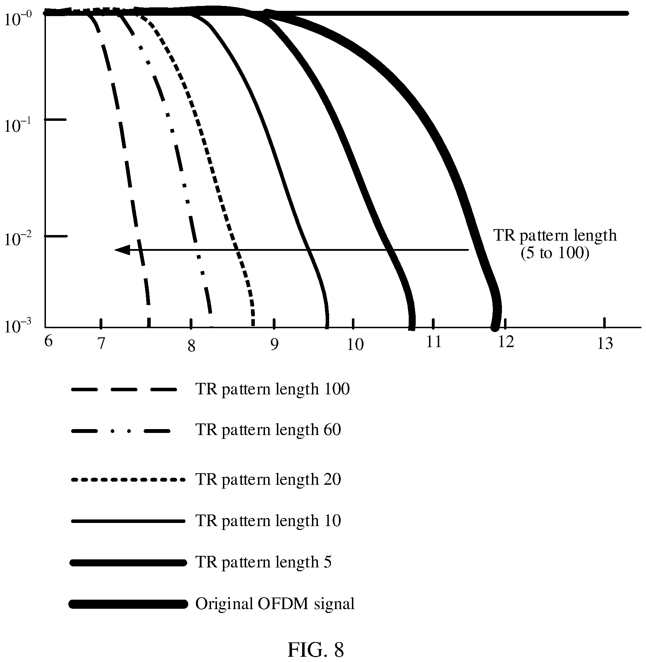

For example, FIG. 8 is a diagram of a relationship between a TR pattern length and PAPR suppression performance. In FIG. 8, PAPR suppression performance corresponding to TR patterns of different lengths when a quantity of RBs is 132 is used as an example. In FIG. 8, a horizontal coordinate is a PAPR threshold PAPR0, and a vertical coordinate is a PAPR complementary cumulative distribution statistical probability [PAPR>PAPR0]. It can be seen from FIG. 8 that, as a TR pattern length increases, PAPR suppression performance is better, but spectral efficiency is increasingly low. Therefore, in consideration of reduction of spectral efficiency, in embodiments of this application, an appropriate TR pattern length is designed based on a requirement on the PAPR suppression performance. The longer length the TR pattern is, the smaller a PAPR suppression gain is and the closer the PAPR suppression gain is to convergence. With spectral efficiency within a specific range maintained, it is determined through experiments that a TR pattern length is not greater than 10% of a data bandwidth (or an IFFT length), and most PAPR suppression gains can be obtained. For example, if a bandwidth is 32 RBs and a TR pattern length does not exceed 52, most PAPR suppression gains can be obtained. When a bandwidth is 66 RBs and a TR pattern length does not exceed 102, most PAPR suppression gains can be obtained. When a bandwidth is 132 RBs and a TR pattern length does not exceed 158, most PAPR suppression gains can be obtained. When a bandwidth is 264 RBs and a TR pattern length does not exceed 316, most PAPR suppression gains can be obtained. Therefore, in consideration of a loss of actual spectral efficiency, in embodiments of this application, the TR pattern lengths in Table 1 to Table 5 can be determined, so that the PAPR suppression performance can be ensured, and the loss of spectral efficiency can be minimized. For example, the loss of about 3% spectral efficiency can be ensured.

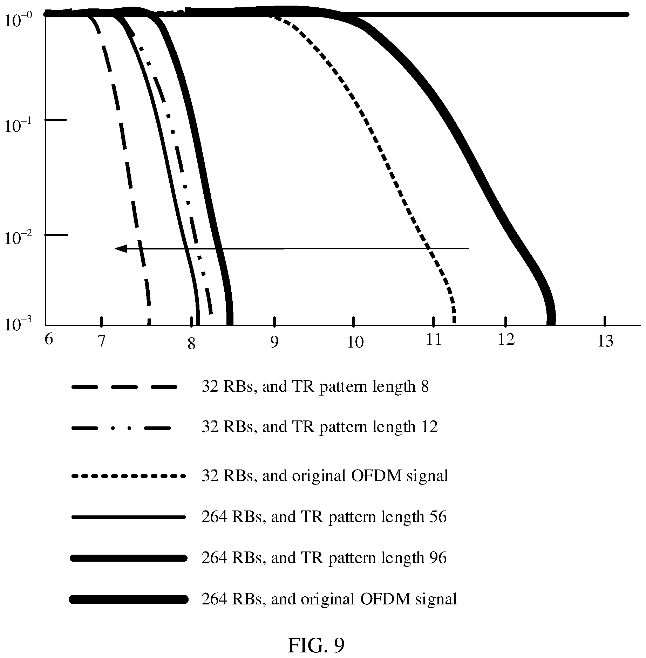

For example, FIG. 9 is a diagram of a relationship between TR patterns of different lengths and PAPR suppression performance. In FIG. 9, an example in which a quantity of RBs is 32 and 264, TR pattern lengths corresponding to the quantity of RBs being 32 are 8 and 12, and TR pattern lengths corresponding to the quantity of RBs being 264 are 56 and 96 is used. Correspondingly, a relationship between a TR pattern length, a quantity of RBs, PAPR suppression performance, and a spectral efficiency loss is shown in Table 9. In FIG. 9, a horizontal coordinate is a PAPR threshold PAPR0, and a vertical coordinate is PAPR complementary cumulative distribution statistical probability [PAPR>PAPR0].

**Table 9**

| Quantity of RBs | TR pattern length | Spectral efficiency loss | PAPR suppression gain |
|---|---|---|---|
| 32 | 8 | 2.08% | 3.2 dB |
| 32 | 12 | 3.13% | 3.8 dB |
| 66 | 16 | 2.02% | 3.6 dB |
| 66 | 24 | 3.03% | 4.1 dB |
| 132 | 32 | 2.02% | 3.9 dB |
| 132 | 48 | 3.03% | 4.2 dB |
| 264 | 56 | 1.76% | 3.8 dB |
| 264 | 96 | 3.03% | 4.3 dB |

It can be seen from Table 9 that, when the quantity of RBs is 32, the TR pattern length is 8, and the PAPR is greater than 1e-3, the PAPR suppression gain is 3.2 dB, and the spectral efficiency loss is 2.08%. When the TR pattern length is 12 and the PAPR is greater than 1e-3, the PAPR suppression gain is 3.8 dB, and the spectral efficiency is 3.13%. When a requirement on the PAPR suppression performance is 3.1 dB, it may be determined that the TR pattern length is 8. This avoids the TR pattern whose length is 12, and reduces a spectral efficiency loss.

Correspondingly, Table 6 is also different based on the PAPR suppression performance and spectral efficiency. The following lists possible longest TR patterns corresponding to different quantities of RBs.

For example, Table 10 shows a longest TR pattern corresponding to a quantity of RBs=132. In Table 10, an example in which the sub-carriers are numbered from 0 is used.

**Table 10**

| 1 | 2 | 3 | 4 | 5 | 6 | 7 | 8 | 9 | 10 |
|---|---|---|---|---|---|---|---|---|---|
| 843 | 27 | 16 | 127 | 1515 | 1475 | 245 | 1532 | 1556 | 6 |
| **11** | **12** | **13** | **14** | **15** | **16** | **17** | **18** | **19** | **20** |
| 913 | 1431 | 1198 | 508 | 1482 | 1351 | 1527 | 868 | 206 | 142 |
| **21** | **22** | **23** | **24** | **25** | **26** | **27** | **28** | **29** | **30** |
| 93 | 1565 | 249 | 1080 | 1237 | 801 | 34 | 554 | 376 | 900 |
| **31** | **32** | **33** | **34** | **35** | **36** | **37** | **38** | **39** | **40** |
| 1250 | 445 | 1518 | 988 | 929 | 1175 | 232 | 22 | 1148 | 1245 |
| **41** | **42** | **43** | **44** | **45** | **46** | **47** | **48** | **49** | **50** |
| 640 | 82 | 1072 | 167 | 1537 | 392 | 31 | 607 | 1268 | 172 |
| **51** | **52** | **53** | **54** | **55** | **56** | **57** | **58** | **59** | **60** |
| 1350 | 932 | 153 | 644 | 1177 | 1331 | 1296 | 409 | 124 | 1121 |
| **61** | **62** | **63** | **64** | **65** | **66** | **67** | **68** | **69** | **70** |
| 1543 | 797 | 606 | 1033 | 1196 | 1408 | 631 | 446 | 1521 | 512 |

(continued)

| 71 | 72 | 73 | 74 | 75 | 76 | 77 | 78 | 79 | 80 |
|---|---|---|---|---|---|---|---|---|---|
| 1069 | 1224 | 980 | 1310 | 1398 | 198 | 1068 | 735 | 407 | 15 |
| 81 | 82 | 83 | 84 | 85 | 86 | 87 | 88 | | |
| 546 | 214 | 1150 | 76 | 1292 | 1071 | 553 | 716 | | |

For example, Table 11 shows a longest TR pattern corresponding to a quantity of RBs=264. In Table 11, an example in which the sub-carriers are numbered from 0 is used.

| 1 | 2 | 3 | 4 | 5 | 6 | 7 | 8 | 9 | 10 |
|---|---|---|---|---|---|---|---|---|---|
| 3052 | 2921 | 87 | 756 | 459 | 272 | 2371 | 3054 | 3165 | 170 |
| 11 | 12 | 13 | 14 | 15 | 16 | 17 | 18 | 19 | 20 |
| 3128 | 2064 | 17 | 2525 | 25 | 10 | 2853 | 3146 | 1127 | 2985 |
| 21 | 22 | 23 | 24 | 25 | 26 | 27 | 28 | 29 | 30 |
| 30 | 2809 | 2880 | 2219 | 2499 | 1716 | 829 | 1165 | 1956 | 392 |
| 31 | 32 | 33 | 34 | 35 | 36 | 37 | 38 | 39 | 40 |
| 1347 | 541 | 2999 | 1157 | 2283 | 778 | 71 | 1792 | 1621 | 1617 |
| 41 | 42 | 43 | 44 | 45 | 46 | 47 | 48 | 49 | 50 |
| 222 | 2776 | 59 | 2236 | 1197 | 546 | 1537 | 2212 | 866 | 2667 |
| 51 | 52 | 53 | 54 | 55 | 56 | 57 | 58 | 59 | 60 |
| 1710 | 2112 | 2515 | 503 | 3164 | 1761 | 358 | 2574 | 142 | 950 |
| 61 | 62 | 63 | 64 | 65 | 66 | 67 | 68 | 69 | 70 |
| 2856 | 3073 | 2296 | 1223 | 2061 | 940 | 1391 | 2113 | 69 | 1763 |
| 71 | 72 | 73 | 74 | 75 | 76 | 77 | 78 | 79 | 80 |
| 2876 | 1624 | 2793 | 779 | 751 | 1873 | 1827 | 920 | 1410 | 1839 |
| 81 | 82 | 83 | 84 | 85 | 86 | 87 | 88 | 89 | 90 |
| 2057 | 2596 | 3069 | 791 | 160 | 2552 | 2882 | 1969 | 387 | 3132 |
| 91 | 92 | 93 | 94 | 95 | 96 | | | | |
| 336 | 339 | 2497 | 1971 | 749 | 2912 | | | | |

For example, Table 12 shows a longest TR pattern corresponding to a quantity of RBs=106. In Table 12, an example in which the sub-carriers are numbered from 0 is used.

| 1 | 2 | 3 | 4 | 5 | 6 | 7 | 8 | 9 | 10 |
|---|---|---|---|---|---|---|---|---|---|
| 45 | 1164 | 330 | 49 | 13 | 1262 | 4 | 1261 | 217 | 1233 |
| 11 | 12 | 13 | 14 | 15 | 16 | 17 | 18 | 19 | 20 |
| 1115 | 141 | 256 | 1249 | 219 | 1218 | 1178 | 66 | 306 | 927 |
| 21 | 22 | 23 | 24 | 25 | 26 | 27 | 28 | 29 | 30 |
| 410 | 748 | 806 | 609 | 879 | 477 | 1210 | 604 | 583 | 443 |
| 31 | 32 | 33 | 34 | 35 | 36 | 37 | 38 | 39 | 40 |
| 1087 | 262 | 259 | 154 | 676 | 825 | 989 | 1271 | 643 | 1137 |
| 41 | 42 | 43 | 44 | 45 | 46 | 47 | 48 | 49 | 50 |
| 936 | 1081 | 576 | 607 | 765 | 469 | 260 | 843 | 909 | 2 |

(continued)

| 51 | 52 | 53 | 54 | 55 | 56 | 57 | 58 | 59 | 60 |
|-----|-----|-------|-----|-----|-----|------|------|-----|-----|
| 147 | 202 | 11198 | 344 | 46 | 140 | 1159 | 1027 | 872 | 785 |

| 61 | 62 | 63 | 64 | 65 | | | | | |
|-----|------|-----|-----|-----|--|--|--|--|--|
| 781 | 1030 | 928 | 716 | 133 | | | | | |

S402: The first device determines the target TR pattern based on the first information, where the target TR pattern is a sub-pattern of the longest TR pattern.

The first information may be used to determine the length L of the target TR pattern, so as to determine the target TR pattern. In this embodiment of this application, the first information includes the following two implementations.

Implementation 1: The first information may indicate the carrier bandwidth used by the first device. In this case, the first device may determine the length L of the target TR pattern based on the quantity of RBs corresponding to the carrier bandwidth and the mapping relationship between the TR pattern length and the quantity of RBs. After determining L, the first device selects the first L sub-carriers from the longest TR pattern as the target TR pattern.

Implementation 2: The first information may indicate the length L of the target TR pattern. In this case, the first device selects the first L sub-carriers from the longest TR pattern as the target TR pattern based on L.

Implementation 3: The first information indicates the carrier bandwidth used by the first device. In this case, a set formed by the sub-carriers included in the carrier bandwidth used by the first device and overlapping the sub-carriers in the sub-carriers included in the longest TR pattern is used as the final target TR pattern.

It should be noted that, that the second device sends a carrier bandwidth to the first device is an optional step. In other words, if the first information indicates the carrier bandwidth used by the first device, the second device may not send the first information to the first device.

As described above, the PAPR suppression performance corresponding to TR patterns of different lengths may be different. Therefore, in this embodiment of this application, the target TR pattern may be determined based on the PAPR suppression performance. A TR pattern of a different length may be selected based on the requirement on the PAPR suppression performance, and this is flexible and controllable.

For example, in Implementation 1, when the first information indicates the carrier bandwidth used by the first device, the first device determines the length of the target TR pattern based on the quantity of RBs corresponding to the carrier bandwidth, the mapping relationship between the TR pattern length and the quantity of RBs, and the requirement on the PAPR suppression performance. In this case, the first device may determine the target TR pattern from the longest TR pattern based on the length of the target TR pattern. Alternatively, the first device determines a length of an initial target TR pattern (for example, referred to as a first target TR pattern) based on the quantity of RBs corresponding to the carrier bandwidth and the mapping relationship between the TR pattern length and the quantity of RBs, and determines the final target TR pattern (for example, referred to as a second target TR pattern) from the longest TR target pattern based on the length of the first target TR pattern. Alternatively, the first device may use, as the final target TR pattern, the set formed by the sub-carriers included in the used carrier bandwidth and overlapping the sub-carriers in the sub-carriers included in the longest TR pattern. It may be understood that the second target TR pattern is a sub-pattern of the first target TR pattern.

It may also be understood that a TR pattern corresponding to a carrier bandwidth or a quantity of RBs includes a plurality of TR sub-patterns with different PAPR suppression performance. A sub-carrier set corresponding to a sub-pattern of a TR pattern corresponding to higher PAPR suppression performance includes a sub-carrier set corresponding to a sub-pattern of a TR pattern corresponding to lower PAPR suppression performance. For example, a first carrier bandwidth corresponds to a first TR pattern, and the first TR pattern includes a first TR sub-pattern and a second TR sub-pattern. A first sub-carrier set corresponding to the first TR sub-pattern may include a second sub-carrier set corresponding to the second TR sub-pattern, where first PAPR suppression performance corresponding to the first TR sub-pattern is greater than second PAPR suppression performance corresponding to the second TR sub-pattern. It may also be considered that a TR pattern corresponding to higher PAPR suppression performance is an extension of a TR pattern corresponding to lower PAPR suppression performance. That is, TR patterns corresponding to different PAPR suppression performance have a nesting relationship.

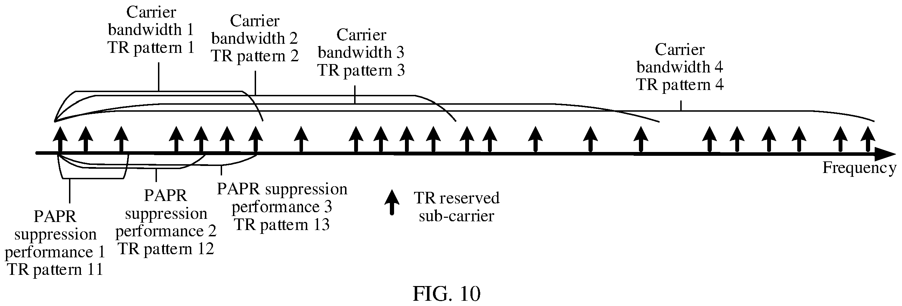

For ease of understanding, FIG. 10 is a diagram of mapping between PAPR suppression performance and TR patterns. In FIG. 10, a longest TR pattern is a TR pattern corresponding to a carrier bandwidth 4, namely, a TR pattern 4. In FIG. 10, a carrier bandwidth 1 is smaller than a carrier bandwidth 2, the carrier bandwidth 2 is smaller than a carrier bandwidth 3, and the carrier bandwidth 3 is smaller than the carrier bandwidth 4. A sub-carrier set corresponding to the TR pattern 4 includes a sub-carrier set corresponding to a TR pattern 3, the sub-carrier set corresponding to the TR pattern 3 includes a sub-carrier set corresponding to a TR pattern 2, and the sub-carrier set corresponding to the TR pattern 2 includes a sub-carrier set corresponding to a TR pattern 1. In addition, in FIG. 10, the TR pattern 1 includes a plurality of TR sub-patterns with different PAPR suppression performance. For example, PAPR suppression performance 1 corresponds to a TR sub-pattern 11, PAPR suppression performance 2 corresponds to a TR sub-pattern 12, and PAPR suppression performance 3 corresponds to a TR sub-pattern 13. The PAPR suppression performance 1 is lower than the PAPR suppression performance 2, and the PAPR suppression performance 2 is lower than the PAPR suppression performance 3. Correspondingly, a sub-carrier set corresponding to the TR sub-pattern 13 includes a sub-carrier set corresponding to the TR sub-pattern 12, and the sub-carrier set corresponding to the TR pattern 12 includes a sub-carrier set corresponding to the TR pattern 11.

It should be noted that, a specific location of a newly added sub-carrier in a sub-carrier set corresponding to higher PAPR suppression performance relative to a sub-carrier set corresponding to lower PAPR suppression performance is not limited in embodiments of this application. For example, first PAPR suppression performance is higher than second PAPR suppression performance, the first PAPR suppression performance corresponds to a first sub-carrier set, and the second PAPR suppression performance corresponds to a second sub-carrier set. A specific location of a sub-carrier in the first carrier set other than the second sub-carrier set is not limited in this embodiment of this application. For example, the sub-carrier in the first sub-carrier set other than the second sub-carrier set may be located in a newly added bandwidth. For another example, sub-carriers in the first sub-carrier set other than the second sub-carrier set may include a first part and a second part, the first part may be located in a newly added bandwidth, and the second part may be located outside the newly added bandwidth.

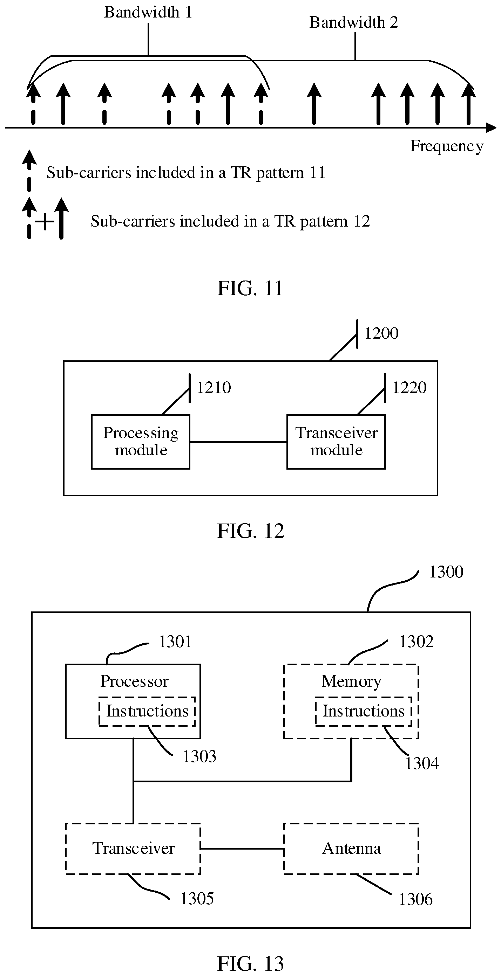

For ease of understanding, FIG. 11 is a diagram of mapping between PAPR suppression performance and TR patterns. In FIG. 11, an example in which a TR pattern 11 and a TR pattern 12 are included is used. The TR pattern 11 corresponds to first PAPR suppression performance, and the TR pattern 12 corresponds to second PAPR suppression performance. The first PAPR suppression performance is lower than the second PAPR suppression performance. Dashed-line arrows in FIG. 11 represent sub-carriers included in a sub-carrier set 1 corresponding to the TR pattern 11. Solid-line arrows represent sub-carriers newly added to a sub-carrier set 2 corresponding to the TR pattern 12 relative to the sub-carrier set 1. It can be seen from FIG. 11 that, relative to the sub-carrier set 1, some of the newly added sub-carriers in the sub-carrier set 2 are located in a newly added bandwidth (that is, outside a bandwidth 1), and the others are located outside the newly added bandwidth (namely, in the bandwidth 1).

It should be noted that start locations of TR sub-patterns corresponding to different PAPR suppression performance in one TR pattern are not limited in embodiments of this application. That is, start locations of TR sub-patterns corresponding to different PAPR suppression performance may be the same or may be different. In other words, whether numbers of first sub-carriers included in TR sub-patterns corresponding to different PAPR suppression performance are the same is not limited in embodiments of this application.

In Implementation 2, the length of the target TR pattern indicated by using the first information may be determined based on a requirement on PAPR suppression performance. For example, the second device determines the length of the target TR pattern based on the requirement of the first device on the PAPR suppression performance, and provides the length of the target TR pattern to the first device by using the first information. The first device may determine, based on a length of the final target TR pattern and the longest TR pattern, the target TR pattern that meets the requirement on the PAPR suppression performance.

S403: The first device sends second information to the second device, and correspondingly the second device receives the second information sent by the first device.

The second information may indicate the requirement of the first device on the PAPR suppression performance. In this embodiment of this application, the requirement of the first device on the PAPR suppression performance may be represented by using a TR pattern and a length of the TR pattern to be used by the first device. For example, Table 13 shows a mapping relationship between a TR pattern index, a TR pattern length, a PAPR suppression gain, and a spectral efficiency loss.

**Table 13**

| TR pattern index | TR pattern length | Spectral efficiency loss | PAPR suppression gain |
|---|---|---|---|
| 0 | 4 | 0.25% | 1.1 dB |
| 1 | 8 | 0.51% | 2.0 dB |
| 2 | 16 | 1.01% | 2.9 dB |
| 3 | 24 | 1.52% | 3.5 dB |
| 4 | 32 | 2.02% | 3.9 dB |
| 5 | 48 | 3.03% | 4.2 dB |

Correspondingly, the second information flexibly indicates the requirement of the first device on the PAPR suppression performance in the following two indication manners.

Indication manner 1: The second information may include the length of the TR pattern to be used by the first device. It should be understood that there is a correspondence between different PAPR suppression performance and TR pattern lengths. Therefore, the requirement of the first device on the PAPR suppression performance can be indirectly indicated by using the length of the to-be-used TR pattern.

Indication manner 2: The second information may include an index of the TR pattern to be used by the first device. In other words, the TR pattern length is indicated by using the index of the to-be-used TR pattern, so as to indirectly indicate the requirement of the first device on the PAPR suppression performance.

Indication manner 3: The second information may include the requirement of the first device on the PAPR suppression performance. For example, it indicates that a 3 dB PAPR needs to be suppressed.

It should be understood that this is not limited to the foregoing three indication manners in which the second information indicates the requirement of the first device on the PAPR suppression performance. For example, the second information may include the TR pattern to be used by the first device. In other words, the TR pattern length is indicated by using the to-be-used TR pattern, so as to indirectly indicate the requirement of the first device on the PAPR suppression performance.

The second device receives the second information, and may determine the length L of the target TR pattern based on the second information. After determining the length L of the target TR pattern, the second device sends the first information to the first device, to indicate the length L of the target TR pattern by using the first information. There are also a plurality of indication manners in which the first information indicates the length L of the target TR pattern.

Indication manner 1: The first information includes L. In this case, the first device may select the first L sub-carriers from the longest TR pattern as the target TR pattern. The indication manner in which the first information includes L is simple and clear, and direct. For example, a carrier bandwidth used by the first device is 50 MHz, and it may be determined, based on a mapping relationship between a TR pattern length and a quantity of RBs, that a TR pattern length corresponding to 50 MHz is 12. However, in consideration of the requirement of the first device on the PAPR suppression performance, the second device determines that the first device should use a TR pattern whose length is 8. In this case, the first information sent by the second device to the first device may include 8, namely, the length of the target TR pattern.

Indication manner 2: The first information includes $\Delta L$. The first device receives the first information and determines the length L of the target TR pattern. For example, the first device determines, based on a quantity of RBs corresponding to a used carrier bandwidth and a mapping relationship between a TR pattern length and a quantity of RBs, that the TR pattern length corresponding to the carrier bandwidth is TR_L. The first device may determine, based on the first information and TR_L, that the length L of the target TR pattern is: $L=TR\_L+\Delta L$, or $L=TR\_L-\Delta L$. Therefore, the first device selects the first L sub-carriers from the longest TR pattern as the target TR pattern. For example, a carrier bandwidth used by the first device is 50 MHz, and it may be determined, based on the mapping relationship between a TR pattern length and a quantity of RBs, that a TR pattern length TR_L corresponding to 50 MHz is 12. However, in consideration of the requirement of the first device on the PAPR suppression performance, the second device determines that the first device should use a TR pattern whose length is 8. In this case, the first information sent by the second device to the first device includes 4, that is, $\Delta L=4$. The first device receives the first information, and may determine that $L=TR\_L-\Delta L=8$.

Indication manner 3: The first information may include a TR pattern. In this case, the first device may determine the length L of the target TR pattern based on the TR pattern included in the first information, so as to select the first L sub-carriers from the longest TR pattern as the target TR pattern.

It may be understood that the first information may be carried in a system message, for example, at least one of broadcast information of a system information block (system information block, SIB) 1, other system information (other system information, OSI), or a master system information block (master information block, MIB). Optionally, the second device may send the first information to the first device through broadcast or multicast. This can avoid scheduling different resources for different devices to send the first information, and reduce signaling overheads for resource scheduling and reduce system scheduling complexity. Similarly, the longest TR pattern may also be sent to the first device by using a system message.

If the first information is sent in a radio resource control (radio resource control, RRC) connection setup phase and a subsequent communication process, the second device may send the first information to the first device by using at least one of RRC signaling (for example, an RRC setup (RRC setup) message, RRC reconfiguration (RRC Reconfiguration) signaling, or RRC resume (RRC Resume) signaling), downlink control information (downlink control information, DCI), group DCI, or a media access control (media access control, MAC) control element (control element, CE). Alternatively, the first information may be transmitted to the first device along with data. Alternatively, the first information may be carried on a physical downlink shared channel (physical downlink shared channel, PDSCH) separately allocated to the first device. In this way, for different first devices, respective corresponding first information may be sent, so that each first device has good PARP suppression performance. For example, different TR patterns may be configured for first devices based on different link budgets of different locations or different regions in which the first devices are located, to optimize system transmit power efficiency, optimize PAPR suppression performance, and improve overall communication performance of UE and a system.

S404: The first device sends information to the second device based on the target TR pattern, or the first device demodulates received information based on the target TR pattern.

After determining the target TR pattern, the first device may send the information to the second device based on the target TR pattern. For example, the first device may use sub-carriers included in the target TR pattern to carry signals for PAPR suppression, and use some tones except the reserved tones to carry data signals. Certainly, to improve spectral efficiency, the sub-carriers included in the target TR pattern may also be used to carry the data signals. Alternatively, when demodulating the information received from the second device, the first device may skip or remove the reserved tones for PAPR suppression, that is, may not decode signals on the reserved tones for PAPR suppression.

This embodiment of this application provides the longest TR pattern. The longest TR pattern includes a plurality of TR patterns of different lengths, that is, includes TR patterns corresponding to a plurality of carrier bandwidths or quantities of RBs. TR patterns corresponding to different carrier bandwidths have a nesting relationship. For example, a TR pattern corresponding to a larger carrier bandwidth is an extension of a TR pattern corresponding to a smaller carrier bandwidth. In this way, a TR pattern corresponding to each carrier bandwidth belongs to a sub-pattern of the longest TR pattern. According to the method provided in this embodiment of this application, compared with storing a TR pattern corresponding to each individual carrier bandwidth, storing only a maximum TR pattern by the device can avoid storage of TR patterns of different lengths, and save storage space. In addition, in this embodiment of this application, compared with determining a corresponding TR pattern based on each carrier bandwidth, determining the target TR pattern based on the longest TR pattern does not compromise performance. In other words, according to the method provided in this embodiment of this application, storage space can be saved without compromising system performance.

In addition, in this embodiment of this application, because the longest TR pattern is stored, a TR pattern of an appropriate length may be selected based on the requirement on the PAPR suppression performance, so that the PAPR suppression performance can be flexibly controlled. In this way, both the PAPR suppression performance and the frequency efficiency loss can be considered.

Optionally, the first device and the second device may separately store a plurality of TR patterns applicable to different bandwidths, different quantities of RBs, or different IFFT lengths. There is a nesting characteristic between these TR patterns, that is, the TR patterns meet the TR pattern nesting characteristic in the foregoing embodiment. For example, the first device and the second device separately store all or some tables of a TR pattern 1 (Table 14), a TR pattern 2 (Table 15), a TR pattern 3 (Table 16), and a TR pattern 4 (Table 17) that have a nesting characteristic and that correspond to Table 6, where there is the nesting characteristic between the TR pattern 1, the TR pattern 2, the TR pattern 3, and the TR pattern 4. Similarly, the first device and the second device may select, based on different bandwidths, different quantities of RBs, or different IFFT lengths, and the correspondence with a TR pattern length shown in Table 1, Table 2, Table 3, Table 4, or Table 5, to use the TR pattern 1, the TR pattern 2, the TR pattern 3, or the TR pattern 4.

**Table 14**

| 1 | 2 | 3 | 4 | 5 | 6 | 7 | 8 | 9 | 10 |
|---|---|---|---|---|---|---|---|---|---|
| 362 | 307 | 5 | 42 | 58 | 340 | 306 | 294 | 67 | 379 |
| **11** | **12** | | | | | | | | |
| 2323 | 2967 | | | | | | | | |

**Table 15**

| 1 | 2 | 3 | 4 | 5 | 6 | 7 | 8 | 9 | 10 |
|---|---|---|---|---|---|---|---|---|---|
| 362 | 307 | 5 | 42 | 58 | 340 | 306 | 294 | 67 | 379 |
| **11** | **12** | **13** | **14** | **15** | **16** | **17** | **18** | **19** | **20** |
| 102 | 53 | 646 | 625 | 751 | 720 | 758 | 196 | 396 | 215 |
| **21** | **22** | **23** | **24** | | | | | | |
| 619 | 87 | 183 | 112 | | | | | | |

**Table 16**

| 1 | 2 | 3 | 4 | 5 | 6 | 7 | 8 | 9 | 10 |
|---|---|---|---|---|---|---|---|---|---|
| 362 | 307 | 5 | 42 | 58 | 340 | 306 | 294 | 67 | 379 |

(continued)

| 11 | 12 | 13 | 14 | 15 | 16 | 17 | 18 | 19 | 20 |
|---|---|---|---|---|---|---|---|---|---|
| 102 | 53 | 646 | 625 | 751 | 720 | 758 | 196 | 396 | 215 |
| 21 | 22 | 23 | 24 | 25 | 26 | 27 | 28 | 29 | 30 |
| 619 | 87 | 183 | 112 | 1488 | 1484 | 1547 | 1100 | 1427 | 1448 |
| 31 | 32 | 33 | 34 | 35 | 36 | 37 | 38 | 39 | 40 |
| 966 | 1358 | 1561 | 1384 | 1571 | 1246 | 1072 | 936 | 1408 | 532 |
| 41 | 42 | 43 | 44 | 45 | 46 | 47 | 48 | | |
| 866 | 55 | 214 | 1582 | 96 | 999 | 1244 | 631 | | |

**Table 17**

| 1 | 2 | 3 | 4 | 5 | 6 | 7 | 8 | 9 | 10 |
|---|---|---|---|---|---|---|---|---|---|
| 362 | 307 | 5 | 42 | 58 | 340 | 306 | 294 | 67 | 379 |
| 11 | 12 | 13 | 14 | 15 | 16 | 17 | 18 | 19 | 20 |
| 102 | 53 | 646 | 625 | 751 | 720 | 758 | 196 | 396 | 215 |
| 21 | 22 | 23 | 24 | 25 | 26 | 27 | 28 | 29 | 30 |
| 619 | 87 | 183 | 112 | 1488 | 1484 | 1547 | 1100 | 1427 | 1448 |
| 31 | 32 | 33 | 34 | 35 | 36 | 37 | 38 | 39 | 40 |
| 966 | 1358 | 1561 | 1384 | 1571 | 1246 | 1072 | 936 | 1408 | 532 |
| 41 | 42 | 43 | 44 | 45 | 46 | 47 | 48 | 49 | 50 |
| 866 | 55 | 214 | 1582 | 96 | 999 | 1244 | 631 | 3125 | 3167 |
| 51 | 52 | 53 | 54 | 55 | 56 | 57 | 58 | 59 | 60 |
| 3102 | 2229 | 2366 | 1996 | 1910 | 2068 | 2419 | 2361 | 2769 | 2568 |
| 61 | 62 | 63 | 64 | 65 | 66 | 67 | 68 | 69 | 70 |
| 2147 | 2303 | 3147 | 2557 | 2378 | 3121 | 2951 | 2762 | 2032 | 3085 |
| 71 | 72 | 73 | 74 | 75 | 76 | 77 | 78 | 79 | 80 |
| 2685 | 3036 | 3001 | 817 | 1978 | 2211 | 2049 | 2776 | 1076 | 1762 |
| 81 | 82 | 83 | 84 | 85 | 86 | 87 | 88 | 89 | 90 |
| 1946 | 2688 | 2829 | 2917 | 2571 | 2601 | 2540 | 2474 | 1731 | 2944 |
| 91 | 92 | 93 | 94 | 95 | 96 | | | | |
| 2323 | 2967 | 2969 | 1631 | 1710 | 2704 | | | | |

Particularly, in consideration of a location of a sub-carrier for a reference signal, in this embodiment of this application, the TR pattern may be designed to avoid the sub-carrier carrying the reference signal. In other words, a reference signal is carried in a sub-carrier other than a sub-carrier included in the target TR pattern.

Table 18 shows several parameters for designing a TR pattern when a reference signal is considered, namely, a carrier bandwidth, a quantity of RBs, an SCS, and reference signal density.

**Table 18**

| Carrier bandwidth | 50/100/200/400 MHz |
|---|---|
| Quantity of RBs | 32/66/132/264 |
| SCS | 120 K |
| Reference signal density | 1/4, 1/2, or 1/24 |

The reference signal density is 1/4, that is, the reference signal is placed on one of every four sub-carriers. Therefore, when the TR pattern is designed, a location of the sub-carrier for the reference signal can be avoided. In other words, this avoids a location of the sub-carrier for the reference signal and a location of a sub-carrier in the TR pattern overlapping each other. For example, based on Table 18, the designed longest TR pattern may be shown in Table 19. Compared with that in Table 6, the location of the sub-carrier for the reference signal is avoided in Table 19.

**Table 19**

| 1 | 2 | 3 | 4 | 5 | 6 | 7 | 8 | 9 | 10 |
|---|---|---|---|---|---|---|---|---|---|
| 43 | 255 | 260 | 380 | 262 | 4 | 368 | 64 | 96 | 40 |
| 11 | 12 | 13 | 14 | 15 | 16 | 17 | 18 | 19 | 20 |
| 131 | 118 | 606 | 432 | 716 | 406 | 708 | 706 | 536 | 467 |
| 21 | 22 | 23 | 24 | 25 | 26 | 27 | 28 | 29 | 30 |
| 662 | 787 | 551 | 566 | 1560 | 1366 | 1355 | 1535 | 1442 | 1367 |
| 31 | 32 | 33 | 34 | 35 | 36 | 37 | 38 | 39 | 40 |
| 1490 | 1008 | 1356 | 1564 | 1182 | 947 | 1496 | 1327 | 998 | 1463 |
| 41 | 42 | 43 | 44 | 45 | 46 | 47 | 48 | 49 | 50 |
| 1058 | 1271 | 1527 | 896 | 1167 | 1492 | 795 | 1580 | 2252 | 3119 |
| 51 | 52 | 53 | 54 | 55 | 56 | 57 | 58 | 59 | 60 |
| 3134 | 3099 | 2846 | 2527 | 1935 | 2264 | 2988 | 2718 | 3100 | 2823 |
| 61 | 62 | 63 | 64 | 65 | 66 | 67 | 68 | 69 | 70 |
| 3078 | 3075 | 1998 | 2420 | 2048 | 2800 | 2868 | 2431 | 2855 | 3034 |
| 71 | 72 | 73 | 74 | 75 | 76 | 77 | 78 | 79 | 80 |
| 2006 | 1107 | 1458 | 2443 | 3118 | 2056 | 2458 | 2136 | 318 | 2696 |
| 81 | 82 | 83 | 84 | 85 | 86 | 87 | 88 | 89 | 90 |
| 136 | 1558 | 1148 | 1895 | 1896 | 2511 | 2210 | 1950 | 2999 | 2398 |
| 91 | 92 | 93 | 94 | 95 | 96 | | | | |
| 171 | 884 | 1682 | 199 | 1859 | 959 | | | | |

The following lists several possible longest TR patterns. Compared with that in Table 6, a location of a sub-carrier for a reference signal is avoided in the following longest TR patterns.

For example, Table 20 shows a longest TR pattern including TR patterns corresponding to different carrier bandwidths when reference signal density is 1/2.

**Table 20**

| 1 | 2 | 3 | 4 | 5 | 6 | 7 | 8 | 9 | 10 |
|---|---|---|---|---|---|---|---|---|---|
| 261 | 333 | 319 | 311 | 187 | 155 | 139 | 25 | 353 | 61 |
| 11 | 12 | 13 | 14 | 15 | 16 | 17 | 18 | 19 | 20 |
| 289 | 101 | 545 | 715 | 703 | 785 | 51 | 685 | 587 | 783 |
| 21 | 22 | 23 | 24 | 25 | 26 | 27 | 28 | 29 | 30 |
| 541 | 717 | 471 | 113 | 1433 | 1039 | 1053 | 1529 | 975 | 1059 |
| 31 | 32 | 33 | 34 | 35 | 36 | 37 | 38 | 39 | 40 |
| 1453 | 1565 | 1153 | 775 | 1349 | 1325 | 1397 | 1009 | 465 | 1581 |
| 41 | 42 | 43 | 44 | 45 | 46 | 47 | 48 | 49 | 50 |
| 901 | 1531 | 1071 | 349 | 693 | 19 | 1283 | 1509 | 2129 | 2309 |
| 51 | 52 | 53 | 54 | 55 | 56 | 57 | 58 | 59 | 60 |

(continued)

| | | | | | | | | | |
|---|---|---|---|---|---|---|---|---|---|
| 2101 | 2725 | 2571 | 2429 | 3047 | 2753 | 2153 | 2587 | 2925 | 2893 |
| **61** | **62** | **63** | **64** | **65** | **66** | **67** | **68** | **69** | **70** |
| 1745 | 1879 | 3087 | 399 | 2053 | 1831 | 1785 | 2411 | 2597 | 1823 |
| **71** | **72** | **73** | **74** | **75** | **76** | **77** | **78** | **79** | **80** |
| 2393 | 2297 | 1711 | 47 | 3019 | 1599 | 2289 | 1217 | 2992 | 397 |
| **81** | **82** | **83** | **84** | **85** | **86** | **87** | **88** | **89** | **90** |
| 2397 | 2097 | 2599 | 1625 | 3143 | 49 | 1845 | 2749 | 1739 | 1777 |
| **91** | **92** | **93** | **94** | **95** | **96** | | | | |
| 1987 | 547 | 849 | 2835 | 2111 | 1741 | | | | |

For example, Table 21 shows a longest TR pattern including TR patterns corresponding to different carrier bandwidths when reference signal density is 1/4.

**Table 21**

| **1** | **2** | **3** | **4** | **5** | **6** | **7** | **8** | **9** | **10** |
|---|---|---|---|---|---|---|---|---|---|
| 42 | 254 | 259 | 379 | 261 | 3 | 367 | 63 | 95 | 130 |
| **11** | **12** | **13** | **14** | **15** | **16** | **17** | **18** | **19** | **20** |
| 39 | 117 | 605 | 431 | 715 | 405 | 70 | 535 | 466 | 7052 |
| **21** | **22** | **23** | **24** | **25** | **26** | **27** | **28** | **29** | **30** |
| 661 | 786 | 550 | 565 | 1559 | 1365 | 1354 | 1534 | 1441 | 1366 |
| **31** | **32** | **33** | **34** | **35** | **36** | **37** | **38** | **39** | **40** |
| 1489 | 1007 | 1355 | 1563 | 1181 | 946 | 1495 | 1326 | 997 | 1462 |
| **41** | **42** | **43** | **44** | **45** | **46** | **47** | **48** | **49** | **50** |
| 1057 | 1270 | 1526 | 895 | 1166 | 1491 | 794 | 1579 | 2251 | 3133 |
| **51** | **52** | **53** | **54** | **55** | **56** | **57** | **58** | **59** | **60** |
| 3118 | 3098 | 2526 | 1934 | 2845 | 2263 | 2987 | 2717 | 3099 | 2822 |
| **61** | **62** | **63** | **64** | **65** | **66** | **67** | **68** | **69** | **70** |
| 3077 | 3074 | 1997 | 2419 | 2047 | 2799 | 2867 | 2430 | 2854 | 1106 |
| **71** | **72** | **73** | **74** | **75** | **76** | **77** | **78** | **79** | **80** |
| 2005 | 3033 | 2457 | 1457 | 2442 | 3117 | 2135 | 2055 | 317 | 1147 |
| **81** | **82** | **83** | **84** | **85** | **86** | **87** | **88** | **89** | **90** |
| 1557 | 135 | 2695 | 1894 | 2209 | 1895 | 2510 | 2397 | 883 | 2998 |
| **91** | **92** | **93** | **94** | **95** | **96** | | | | |
| 2861 | 1681 | 1949 | 958 | 170 | 2466 | | | | |

For example, Table 22 shows a longest TR pattern including TR patterns corresponding to different carrier bandwidths when reference signal density is 1/24.

**Table 22**

| **1** | **2** | **3** | **4** | **5** | **6** | **7** | **8** | **9** | **10** |
|---|---|---|---|---|---|---|---|---|---|
| 253 | 101 | 376 | 344 | 93 | 375 | 12 | 67 | 282 | 154 |
| **11** | **12** | **13** | **14** | **15** | **16** | **17** | **18** | **19** | **20** |

(continued)

| | | | | | | | | | |
|---|---|---|---|---|---|---|---|---|---|
| 246 | 78 | 750 | 668 | 778 | 769 | 791 | 622 | 706 | 573 |
| **21** | **22** | **23** | **24** | **25** | **26** | **27** | **28** | **29** | **30** |
| 396 | 690 | 473 | 775 | 1521 | 1531 | 1091 | 1555 | 1572 | 1347 |
| **31** | **32** | **33** | **34** | **35** | **36** | **37** | **38** | **39** | **40** |
| 1220 | 1527 | 981 | 1482 | 1187 | 1456 | 1124 | 1529 | 444 | 1362 |
| **41** | **42** | **43** | **44** | **45** | **46** | **47** | **48** | **49** | **50** |
| 961 | 511 | 1214 | 47 | 1237 | 1319 | 1276 | 1273 | 3148 | 3106 |
| **51** | **52** | **53** | **54** | **55** | **56** | **57** | **58** | **59** | **60** |
| 2859 | 1766 | 2786 | 3125 | 2104 | 2863 | 2471 | 3165 | 2576 | 2671 |
| **61** | **62** | **63** | **64** | **65** | **66** | **67** | **68** | **69** | **70** |
| 2659 | 2561 | 1779 | 2921 | 2200 | 1953 | 1943 | 3043 | 2029 | 1959 |
| **71** | **72** | **73** | **74** | **75** | **76** | **77** | **78** | **79** | **80** |
| 2186 | 2302 | 3067 | 3112 | 1494 | 2842 | 2588 | 2458 | 1885 | 1835 |
| **81** | **82** | **83** | **84** | **85** | **86** | **87** | **88** | **89** | **90** |
| 1210 | 2739 | 3097 | 2562 | 2428 | 3119 | 2511 | 1155 | 2276 | 2019 |
| **91** | **92** | **93** | **94** | **95** | **96** | | | | |
| 2123 | 2941 | 2957 | 1321 | 2754 | 3132 | | | | |

In consideration of PAPR suppression performance, when a quantity of RBs=132, a longest TR pattern of a length of 88 may be designed. If reference signal density is 1/2, the longest TR pattern may be shown in Table 23.

**Table 23**

| **1** | **2** | **3** | **4** | **5** | **6** | **7** | **8** | **9** | **10** |
|---|---|---|---|---|---|---|---|---|---|
| 1569 | 1543 | 961 | 735 | 1071 | 1537 | 1387 | 73 | 427 | 745 |
| **11** | **12** | **13** | **14** | **15** | **16** | **17** | **18** | **19** | **20** |
| 801 | 451 | 1025 | 1199 | 629 | 793 | 71 | 1509 | 209 | 205 |
| **21** | **22** | **23** | **24** | **25** | **26** | **27** | **28** | **29** | **30** |
| 343 | 461 | 855 | 697 | 837 | 265 | 123 | 471 | 217 | 911 |
| **31** | **32** | **33** | **34** | **35** | **36** | **37** | **38** | **39** | **40** |
| 1257 | 321 | 419 | 11 | 957 | 83 | 1115 | 1461 | 1213 | 565 |
| **41** | **42** | **43** | **44** | **45** | **46** | **47** | **48** | **49** | **50** |
| 1231 | 991 | 545 | 1187 | 203 | 1501 | 637 | 927 | 1225 | 1583 |
| **51** | **52** | **53** | **54** | **55** | **56** | **57** | **58** | **59** | **60** |
| 905 | 397 | 1215 | 649 | 463 | 1407 | 107 | 749 | 213 | 245 |
| **61** | **62** | **63** | **64** | **65** | **66** | **67** | **68** | **69** | **70** |
| 1107 | 1563 | 707 | 485 | 619 | 1531 | 987 | 95 | 303 | 15 |
| **71** | **72** | **73** | **74** | **75** | **76** | **77** | **78** | **79** | **80** |
| 161 | 1121 | 345 | 443 | 569 | 25 | 229 | 1233 | 939 | 1049 |
| **81** | **82** | **83** | **84** | **85** | **86** | **87** | **88** | | |
| 1383 | 1009 | 1311 | 781 | 741 | 1279 | 307 | 615 | | |

In consideration of PAPR suppression performance, when a quantity of RBs=132, a longest TR pattern of a length of 88 may be designed. If reference signal density is 1/4, the longest TR pattern may be shown in Table 24.

**Table 24**

| 1 | 2 | 3 | 4 | 5 | 6 | 7 | 8 | 9 | 10 |
|---|---|---|---|---|---|---|---|---|---|
| 30 | 1558 | 118 | 1543 | 1490 | 1066 | 59 | 5 | 131 | 1333 |
| **11** | **12** | **13** | **14** | **15** | **16** | **17** | **18** | **19** | **20** |
| 1581 | 37 | 1281 | 9 | 498 | 758 | 449 | 1238 | 587 | 635 |
| **21** | **22** | **23** | **24** | **25** | **26** | **27** | **28** | **29** | **30** |
| 1359 | 1199 | 313 | 579 | 1166 | 47 | 238 | 1175 | 1406 | 91 |
| **31** | **32** | **33** | **34** | **35** | **36** | **37** | **38** | **39** | **40** |
| 838 | 1034 | 25 | 641 | 1535 | 199 | 1103 | 1302 | 925 | 873 |
| **41** | **42** | **43** | **44** | **45** | **46** | **47** | **48** | **49** | **50** |
| 1330 | 249 | 403 | 978 | 1170 | 482 | 363 | 682 | 1201 | 1401 |
| **51** | **52** | **53** | **54** | **55** | **56** | **57** | **58** | **59** | **60** |
| 71 | 750 | 1507 | 489 | 334 | 411 | 1463 | 1085 | 571 | 1557 |
| **61** | **62** | **63** | **64** | **65** | **66** | **67** | **68** | **69** | **70** |
| 15 | 645 | 159 | 422 | 39 | 210 | 1418 | 283 | 823 | 1030 |
| **71** | **72** | **73** | **74** | **75** | **76** | **77** | **78** | **79** | **80** |
| 270 | 559 | 1493 | 1439 | 421 | 1035 | 293 | 1501 | 1562 | 1245 |
| **81** | **82** | **83** | **84** | **85** | **86** | **87** | **88** | | |
| 1559 | 674 | 234 | 1301 | 1537 | 21 | 965 | 185 | | |

In consideration of PAPR suppression performance, when a quantity of RBs=132, a longest TR pattern of a length of 88 may be designed. If reference signal density is 1/24, the longest TR pattern may be shown in Table 25.

**Table 25**

| 1 | 2 | 3 | 4 | 5 | 6 | 7 | 8 | 9 | 10 |
|---|---|---|---|---|---|---|---|---|---|
| 291 | 424 | 1086 | 1257 | 339 | 1537 | 1396 | 176 | 889 | 173 |
| **11** | **12** | **13** | **14** | **15** | **16** | **17** | **18** | **19** | **20** |
| 746 | 1430 | 1246 | 508 | 701 | 828 | 174 | 646 | 1206 | 1549 |
| **21** | **22** | **23** | **24** | **25** | **26** | **27** | **28** | **29** | **30** |
| 158 | 1573 | 1443 | 392 | 940 | 114 | 494 | 47 | 638 | 920 |
| **31** | **32** | **33** | **34** | **35** | **36** | **37** | **38** | **39** | **40** |
| 581 | 180 | 800 | 63 | 894 | 1310 | 243 | 1388 | 300 | 395 |
| 41 | **42** | **43** | **44** | **45** | **46** | **47** | **48** | **49** | **50** |
| 717 | 1131 | 7 | 268 | 946 | 327 | 1211 | 237 | 1168 | 371 |
| **51** | **52** | **53** | **54** | **55** | **56** | **57** | **58** | **59** | **60** |
| 853 | 1534 | 6 | 208 | 752 | 273 | 1247 | 855 | 684 | 526 |
| **61** | **62** | **63** | **64** | **65** | **66** | **67** | **68** | **69** | **70** |
| 1083 | 1581 | 121 | 472 | 1237 | 322 | 1524 | 1020 | 155 | 695 |
| **71** | **72** | **73** | **74** | **75** | **76** | **77** | **78** | **79** | **80** |
| 898 | 1505 | 509 | 1135 | 1256 | 253 | 1318 | 857 | 1393 | 1236 |
| **81** | **82** | **83** | **84** | **85** | **86** | **87** | **88** | | |

(continued)

| 1180 | 1290 | 1109 | 124 | 770 | 688 | 55 | 1431 | | |
|------|------|------|-----|-----|-----|----|------|---|---|

In this embodiment provided in this application, the method provided in this embodiment of this application is described from perspectives of the first device, the second device, and interaction between the first device and the second device. To implement functions in the foregoing method provided in embodiments of this application, the first device and the second device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

The following describes, with reference to the accompanying drawings, communication apparatuses configured to implement the foregoing method in embodiments of this application.

FIG. 12 is a block diagram of a communication apparatus 1200 according to an embodiment of this application. The communication apparatus 1200 may include a processing module 1210 and a transceiver module 1220. Optionally, a storage unit may be included. The storage unit may be configured to store instructions (code or a program) and/or data. The processing module 1210 and the transceiver module 1220 may be coupled to the storage unit. For example, the processing module 1210 may read the instructions (the code or the program) and/or the data in the storage unit, to implement a corresponding method. The foregoing modules may be independently disposed, or may be partially or completely integrated.

In some possible implementations, the communication apparatus 1200 can correspondingly implement behavior and functions of the first device in the foregoing method embodiment. The communication apparatus 1200 may be the first device, or may be a component (for example, a chip or a circuit) used in the first device, or may be a chip or a chip group in the first device, or a part of a chip that is configured to perform a related method function.

For example, the communication apparatus 1200 implements the method performed by the first device in embodiments of this application. The transceiver module 1220 is configured to receive first information. The processing module 1210 is configured to: determine a target TR pattern based on the first information, and send information or demodulate received information based on the target TR pattern, where the target TR pattern is a sub-pattern of a longest TR pattern, and the longest TR pattern includes a set of sub-carriers used as reserved tones.

In an optional implementation, the sub-carriers in the longest TR pattern are sorted based on PAPR suppression performance.

In an optional implementation, the longest TR pattern includes a first TR sub-pattern and a second TR sub-pattern, a first sub-carrier set corresponding to the first TR sub-pattern includes a second sub-carrier set corresponding to the second TR sub-pattern, and a first carrier bandwidth corresponding to the first TR sub-pattern is greater than a second carrier bandwidth corresponding to the second TR sub-pattern.

In an optional implementation, a sub-carrier in the first sub-carrier set other than the second sub-carrier set is located outside the second carrier bandwidth.

In an optional implementation, sub-carriers in the first sub-carrier set other than the second sub-carrier set include a first part of sub-carriers and a second part of sub-carriers, the first part of sub-carriers are located in the second carrier bandwidth, and the second part of sub-carriers are located outside the second carrier bandwidth.

In an optional implementation, the first information indicates a carrier bandwidth used by the first device, and the processing module 1210 is specifically configured to: determine a length L of the target TR pattern based on a mapping relationship between a quantity of blocks RBs and a TR pattern and a quantity of RBs corresponding to the carrier bandwidth; and determine the target TR pattern based on the length L and the longest TR pattern.

In an optional implementation, that the processing module 1210 is configured to determine the length L of the target TR pattern includes: The processing module 1210 further determines the length L based on a requirement on the PAPR suppression performance.

In an optional implementation, the first information indicates a length L of the target TR pattern, and the processing module 1210 is specifically configured to determine the target TR pattern based on the length L and the longest TR pattern.

In an optional implementation, the target TR pattern is first L sub-carriers in the longest TR pattern.

In an optional implementation, the transceiver module 1220 is further configured to send second information, where the second information indicates a requirement of the first device on the PAPR suppression performance.

In an optional implementation, a reference signal is carried in a sub-carrier other than a sub-carrier included in the target TR pattern.

For another example, the communication apparatus 1200 implements the method performed by the second device in any embodiment of this application. The processing module 1210 is configured to determine first information, where the first information is used to determine a target TR pattern from a longest TR pattern, and the target TR pattern is a sub-pattern of the longest TR pattern; and the longest TR pattern includes a set of sub-carriers used as reserved tones. The transceiver module 1220 is configured to send the first information to a first device.

In an optional implementation, the sub-carriers in the longest TR pattern are sorted based on PAPR suppression performance.

In an optional implementation, the longest TR pattern includes a first TR sub-pattern and a second TR sub-pattern, a first sub-carrier set corresponding to the first TR sub-pattern includes a second sub-carrier set corresponding to the second TR sub-pattern, and a first carrier bandwidth corresponding to the first TR sub-pattern is larger than a second carrier bandwidth corresponding to the second TR sub-pattern.

In an optional implementation, a sub-carrier in the first sub-carrier set other than the second sub-carrier set is located outside the second carrier bandwidth.

In an optional implementation, sub-carriers in the first sub-carrier set other than the second sub-carrier set include a first part of sub-carriers and a second part of sub-carriers, the first part of sub-carriers are located in the second carrier bandwidth, and the second part of sub-carriers are located outside the second carrier bandwidth.

In an optional implementation, the first information indicates a carrier bandwidth used by the first device, and there is a mapping relationship between a TR pattern length and a quantity of RBs corresponding to the carrier bandwidth.

In an optional implementation, the first information indicates a length L of the target TR pattern.

In an optional implementation, the transceiver module 1220 is further configured to receive second information, where the second information indicates a requirement of the first device on the PAPR suppression performance.

In an optional implementation, a reference signal is carried in a sub-carrier other than a sub-carrier included in the target TR pattern.

It should be understood that the processing module 1210 in this embodiment of this application may be implemented by a processor or a processor-related circuit component, and the transceiver module 1220 may be implemented by a transceiver, a transceiver-related circuit component, or a communication interface.

FIG. 13 is a block diagram of a communication apparatus 1300 according to an embodiment of this application. The communication apparatus 1300 may be a first device, and can implement a function of the first device in the method provided in embodiments of this application. Alternatively, the communication apparatus 1300 may be an apparatus that can support the first device in implementing corresponding functions in the method provided in embodiments of this application. The communication apparatus 1300 may be a chip system. In this embodiment of this application, the chip system may include a chip, or may include a chip and another discrete component. For specific functions, refer to descriptions of the foregoing method embodiment. Alternatively, the communication apparatus 1300 may be a second device, and can implement a function of the second device in the method provided in embodiments of this application. Alternatively, the communication apparatus 1300 may be an apparatus that can support the second device in implementing corresponding functions in the method provided in embodiments of this application. The communication apparatus 1300 may be a chip system. In this embodiment of this application, the chip system may include a chip, or may include a chip and another discrete component. For specific functions, refer to descriptions of the foregoing method embodiment.

The communication apparatus 1300 includes one or more processors 1301 that may be configured to implement or support the communication apparatus 1300 in implementing the functions of the first device in the method provided in embodiments of this application. For details, refer to detailed descriptions in the method example. Details are not described herein again. Alternatively, the one or more processors 1301 may be configured to implement or support the communication apparatus 1300 in implementing the functions of the second device in the method provided in embodiments of this application. For details, refer to detailed descriptions in the method example. Details are not described herein again. The processor 1301 may also be referred to as a processing unit or a processing module, and may implement a specific control function. The processor 1301 may be a general-purpose processor, a dedicated processor, or the like. For example, the processor includes a central processing unit, an application processor, a modem processor, a graphics processing unit, an image signal processor, a digital signal processor, a video codec processor, a controller, a memory, and/or a neural network processor. The central processing unit may be configured to control the communication apparatus 1300, execute a software program, and/or process data. Different processors may be independent components, or may be integrated into one or more processors, for example, integrated into one or more application-specific integrated circuits.

Optionally, the communication apparatus 1300 includes one or more memories 1302, configured to store instructions 1304. The instructions may be run on the processor 1301, to enable the communication apparatus 1300 to perform the method described in the foregoing method embodiment. The memory 1302 and the processor 1301 may be separately disposed, or may be integrated together, or it may be considered that the memory 1302 is coupled to the processor 1301. The coupling in embodiments of this application may be an indirect coupling or a communication connection between apparatuses, units, or modules in an electrical form, a mechanical form, or another form, and is used for information exchange between the apparatuses, the units, or the modules. The processor 1301 may cooperate with the memory 1302. At least one of the at least one memory may be included in the processor. It should be noted that the memory 1302 is not necessary, and therefore is shown by using dashed lines in FIG. 13.

Optionally, the memory 1302 may further store data. The processor and the memory may be separately disposed, or may be integrated together. In this embodiment of this application, the memory 1302 may be a nonvolatile memory like a hard disk drive (hard disk drive, HDD) or a solid-state drive (solid-state drive, SSD), or may be a volatile memory (volatile memory) like a random access memory (random-access memory, RAM). The memory is any other medium that can carry or store expected program code in a form of instructions or a data structure and that can be accessed by a computer, but is not limited thereto. The memory in embodiments of this application may alternatively be a circuit or any other apparatus that can implement a storage function, and is configured to store the program instructions and/or the data.

Optionally, the communication apparatus 1300 may include instructions 1303 (which may also be referred to as code or programs sometimes). The instructions 1303 may be run on the processor, to enable the communication apparatus 1300 to perform the method described in the foregoing embodiments. The processor 1301 may store data.

Optionally, the communication apparatus 1300 may further include a transceiver 1305 and an antenna 1306. The transceiver 1305 may be referred to as a transceiver unit, a transceiver module, a transceiver machine, a transceiver circuit, a transceiver, an input/output interface, or the like, and is configured to implement a transceiver function of the communication apparatus 1300 through the antenna 1306.

The processor 1301 and the transceiver 1305 described in this application may be implemented on an integrated circuit (integrated circuit, IC), an analog IC, a radio frequency integrated circuit (radio frequency identification, RFID), a mixed-signal IC, an ASIC, a printed circuit board (printed circuit board, PCB), an electronic device, or the like. The communication apparatus described in this specification may be implemented by an independent device (for example, an independent integrated circuit or a mobile phone), or may be a part of a large device (for example, a module that may be embedded in another device). For details, refer to the foregoing descriptions about the terminal device and the network device. Details are not described herein again.

Optionally, the communication apparatus 1300 may further include one or more of the following components: a wireless communication module, an audio module, an external memory interface, an internal memory, a universal serial bus (universal serial bus, USB) interface, a power management module, an antenna, a speaker, a microphone, an input/output module, a sensor module, a motor, a camera, a display, or the like. It may be understood that, in some embodiments, the communication apparatus 1300 may include more or fewer components, some components are integrated, or some components are split. These components may be implemented by hardware, software, or a combination of software and hardware.

It should be noted that the communication apparatus in the foregoing embodiments may be the first device (or the second device), or may be a circuit, or may be a chip used in the first device (or the second device), or may be another combined component or part having a function of the first device (or the second device), or the like. When the communication apparatus is the first device (or the second device), the transceiver module may be a transceiver, and may include an antenna, a radio frequency circuit, and the like, and the processing module may be a processor, for example, a central processing module (central processing unit, CPU). When the communication apparatus is the component having the function of the foregoing first device (or the second device), the transceiver module may be a radio frequency unit, and the processing module may be a processor. When the communication apparatus is a chip system, the communication apparatus may be a field programmable gate array (field programmable gate array, FPGA), an application-specific integrated chip (application-specific integrated circuit, ASIC), a system on chip (system on chip, SoC), a CPU, a network processor (network processor, NP), a digital signal processing circuit (digital signal processor, DSP), a microcontroller (microcontroller unit, MCU), a programmable controller (programmable logic device, PLD), or another integrated chip. The processing module may be a processor of the chip system. The transceiver module or the communication interface may be an input/output interface or an interface circuit of the chip system. For example, the interface circuit may be a code/data read/write interface circuit. The interface circuit may be configured to: receive code instructions (the code instructions are stored in a memory, and may be directly read from the memory, or may be read from the memory through another device) and transmit the code instructions to the processor. The processor may be configured to run the code instructions to perform the method in the foregoing method embodiment. For another example, the interface circuit may alternatively be a signal transmission interface circuit between a communication processor and the transceiver machine.

When the communication apparatus is a chip-type apparatus or circuit, the apparatus may include a transceiver unit and a processing unit. The transceiver unit may be an input/output circuit and/or a communication interface. The processing unit is an integrated processor, a microprocessor, or an integrated circuit.

An embodiment of this application further provides a communication system. Specifically, the communication system includes at least one first device and at least one second device. For example, the communication system includes the first device and the second device that are configured to implement related functions in FIG. 4. For details, refer to the related descriptions in the foregoing method embodiment. Details are not described herein again.

An embodiment of this application further provides a computer-readable storage medium including instructions. When the instructions are run on a computer, the computer is enabled to perform the method performed by the second device in FIG. 4. Alternatively, when the instructions are run on a computer, the computer is enabled to perform the method performed by the first device in FIG. 4.

An embodiment of this application further provides a computer program product including instructions. When the instructions are run on a computer, the computer is enabled to perform the method performed by the second device in FIG. 4. Alternatively, when the instructions are run on a computer, the computer is enabled to perform the method performed by the first device in FIG. 4.

An embodiment of this application provides a chip system. The chip system includes a processor, and may further include a memory, configured to implement the function of the second device in the foregoing method, or configured to implement the function of the first device in the foregoing method. The chip system may include a chip, or may include a chip and another discrete component.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiment. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

When the functions are implemented in the form of a software functional unit and sold or used as an independent product, the functions may be stored in a computer-readable storage medium. Based on this understanding, a part that essentially contributes to the technical solutions of this application or a part of the technical solutions may be embodied in a form of a software product. The computer software product is stored in a storage medium, and includes several instructions for enabling a computer device (which may be a personal computer, a server, a network device, or the like) to perform all or some steps of the methods in embodiments of this application. The foregoing storage medium includes any medium, for example, a USB flash drive, a removable hard disk, a read-only memory (read-only memory, ROM), a RAM, a magnetic disk, or an optical disc, that can store program code.

It is clear that a person skilled in the art can make various modifications and variations to this application without departing from the scope of this application. This application is intended to cover these modifications and variations of this application provided that they fall within the scope of protection defined by the following claims and their equivalent technologies.

**Claims**

1. A communication method, comprising:

   receiving, by a first device, first information;
   determining, by the first device, a target tone reservation TR pattern based on the first information, wherein the target TR pattern is a sub-pattern of a longest TR pattern, and the longest TR pattern comprises a set of sub-carriers used as reserved tones; and
   sending, by the first device, information or demodulating received information based on the target TR pattern.

**2.** The method according to claim 1, wherein the sub-carriers in the longest TR pattern are sorted based on peak-to-average power ratio PAPR suppression performance.

**3.** The method according to claim 1 or 2, wherein the longest TR pattern comprises a first TR sub-pattern and a second TR sub-pattern, a first sub-carrier set corresponding to the first TR sub-pattern comprises a second sub-carrier set corresponding to the second TR sub-pattern, and a first carrier bandwidth corresponding to the first TR sub-pattern is larger than a second carrier bandwidth corresponding to the second TR sub-pattern.

**4.** The method according to claim 3, wherein a sub-carrier in the first sub-carrier set other than the second sub-carrier set is located outside the second carrier bandwidth.

**5.** The method according to claim 3, wherein sub-carriers in the first sub-carrier set other than the second sub-carrier set comprise a first part of sub-carriers and a second part of sub-carriers, the first part of sub-carriers are located in the second carrier bandwidth, and the second part of sub-carriers are located outside the second carrier bandwidth.

**6.** The method according to any one of claims 1 to 5, wherein the first information indicates a carrier bandwidth used by the first device, and the determining, by the first device, a target TR pattern based on the first information comprises:

determining, by the first device, a length L of the target TR pattern based on a mapping relationship between a quantity of resource blocks RBs and a TR pattern length and a quantity of RBs corresponding to the carrier bandwidth; and
determining, by the first device, the target TR pattern based on the length L and the longest TR pattern.

**7.** The method according to claim 6, wherein the determining, by the first device, a length L of the target TR pattern further comprises:
further determining, by the first device, L based on a requirement on the PAPR suppression performance.

**8.** The method according to any one of claims 1 to 5, wherein the first information indicates a length L of the target TR pattern, and the determining, by the first device, a target TR pattern based on the first information comprises:
determining, by the first device, the target TR pattern based on the length L and the longest TR pattern.

**9.** The method according to any one of claims 6 to 8, wherein the target TR pattern is first L sub-carriers in the longest TR pattern.

**10.** The method according to any one of claims 1 to 9, wherein the method further comprises:
sending, by the first device, second information, wherein the second information indicates the requirement of the first device on the PAPR suppression performance.

**11.** The method according to any one of claims 1 to 10, wherein a reference signal is carried in a sub-carrier other than a sub-carrier comprised in the target TR pattern.

**12.** A communication method, comprising:

determining, by a second device, first information, wherein the first information is used to determine a target TR pattern from a longest tone reservation TR pattern, the target TR pattern is a sub-pattern of the longest TR pattern, and the longest TR pattern comprises a set of sub-carriers used as reserved tones; and
sending, by the second device, the first information to a first device.

**13.** The method according to claim 12, wherein the sub-carriers in the longest TR pattern are sorted based on peak-to-average power ratio PAPR suppression performance.

**14.** The method according to claim 12 or 13, wherein the longest TR pattern comprises a first TR sub-pattern and a second TR sub-pattern, a first sub-carrier set corresponding to the first TR sub-pattern comprises a second sub-carrier set corresponding to the second TR sub-pattern, and a first carrier bandwidth corresponding to the first TR sub-pattern is larger than a second carrier bandwidth corresponding to the second TR sub-pattern.

**15.** The method according to claim 14, wherein a sub-carrier in the first sub-carrier set other than the second sub-carrier set is located outside the second carrier bandwidth.

16. The method according to claim 14, wherein sub-carriers in the first sub-carrier set other than the second sub-carrier set comprise a first part of sub-carriers and a second part of sub-carriers, the first part of sub-carriers are located in the second carrier bandwidth, and the second part of sub-carriers are located outside the second carrier bandwidth.

17. The method according to any one of claims 12 to 16, wherein the first information indicates a carrier bandwidth used by the first device, and there is a mapping relationship between a TR pattern length and a quantity of resource blocks RBs corresponding to the carrier bandwidth.

18. The method according to any one of claims 12 to 16, wherein the first information indicates a length L of the target TR pattern.

19. The method according to claim 18, wherein the method further comprises:

receiving, by the second device, second information, wherein the second information indicates a requirement of the first device on the PAPR suppression performance; and
determining the first information based on the second information.

20. The method according to any one of claims 12 to 19, wherein a reference signal is carried in a sub-carrier other than a sub-carrier comprised in the target TR pattern.

21. A communication apparatus, comprising a processing module and a transceiver module, wherein

the transceiver module is configured to receive first information; and
the processing module is configured to: determine a target reserved tone TR pattern based on the first information, and send information or demodulate received information based on the target TR pattern, wherein the target TR pattern is a sub-pattern of a longest TR pattern, and the longest TR pattern comprises a set of sub-carriers used as reserved tones.

22. The apparatus according to claim 21, wherein the sub-carriers in the longest TR pattern are sorted based on peak-to-average power ratio PAPR suppression performance.

23. The apparatus according to claim 21 or 22, wherein the longest TR pattern comprises a first TR sub-pattern and a second TR sub-pattern, a first sub-carrier set corresponding to the first TR sub-pattern comprises a second sub-carrier set corresponding to the second TR sub-pattern, and a first carrier bandwidth corresponding to the first TR sub-pattern is larger than a second carrier bandwidth corresponding to the second TR sub-pattern.

24. The apparatus according to claim 23, wherein a sub-carrier in the first sub-carrier set other than the second sub-carrier set is located outside the second carrier bandwidth.

25. The apparatus according to claim 24, wherein sub-carriers in the first sub-carrier set other than the second sub-carrier set comprise a first part of sub-carriers and a second part of sub-carriers, the first part of sub-carriers are located in the second carrier bandwidth, and the second part of sub-carriers are located outside the second carrier bandwidth.

26. The apparatus according to any one of claims 21 to 25, wherein the first information indicates a carrier bandwidth used by the communication apparatus, and the processing module is specifically configured to:

determine a length L of the target TR pattern based on a mapping relationship between a quantity of resource blocks RBs and a TR pattern length and a quantity of RBs corresponding to the carrier bandwidth; and
determine the target TR pattern based on the length L and the longest TR pattern.

27. The apparatus according to claim 26, wherein the processing module further determines the length L based on a requirement on the peak-to-average power ratio PAPR suppression performance.

28. The apparatus according to any one of claims 21 to 25, wherein the first information indicates a length L of the target TR pattern, and the processing module is specifically configured to determine the target TR pattern based on the length L and the longest TR pattern.

29. The apparatus according to any one of claims 26 to 28, wherein the target TR pattern is first L sub-carriers in the longest TR pattern.

30. The apparatus according to any one of claims 21 to 29, wherein the transceiver module is further configured to send second information, wherein the second information indicates the requirement of the communication apparatus on the PAPR suppression performance.

31. The apparatus according to any one of claims 21 to 30, wherein a reference signal is carried in a sub-carrier other than a sub-carrier comprised in the target TR pattern.

32. A communication apparatus, comprising a processing module and a transceiver module, wherein

the processing module is configured to determine first information, wherein the first information is used to determine a target TR pattern from a longest reserved tone TR pattern, the target TR pattern is a sub-pattern of the longest TR pattern, and the longest TR pattern comprises a set of sub-carriers used as reserved tones; and the transceiver module is configured to send the first information to a first device.

33. The apparatus according to claim 32, wherein the sub-carriers in the longest TR pattern are sorted based on peak-to-average power ratio PAPR suppression performance.

34. The apparatus according to claim 32 or 33, wherein the longest TR pattern comprises a first TR sub-pattern and a second TR sub-pattern, a first sub-carrier set corresponding to the first TR sub-pattern comprises a second sub-carrier set corresponding to the second TR sub-pattern, and a first carrier bandwidth corresponding to the first TR sub-pattern is larger than a second carrier bandwidth corresponding to the second TR sub-pattern.

35. The apparatus according to claim 34, wherein a sub-carrier in the first sub-carrier set other than the second sub-carrier set is located outside the second carrier bandwidth.

36. The apparatus according to claim 34, wherein sub-carriers in the first sub-carrier set other than the second sub-carrier set comprise a first part of sub-carriers and a second part of sub-carriers, the first part of sub-carriers are located in the second carrier bandwidth, and the second part of sub-carriers are located outside the second carrier bandwidth.

37. The apparatus according to any one of claims 32 to 36, wherein the first information indicates a carrier bandwidth used by the first device, and there is a mapping relationship between a TR pattern length and a quantity of RBs corresponding to the carrier bandwidth.

38. The apparatus according to any one of claims 32 to 36, wherein the first information indicates a length L of the target TR pattern.

39. The apparatus according to claim 38, wherein the transceiver module is further configured to receive second information, wherein the second information indicates a requirement of the first device on the PAPR suppression performance.

40. The apparatus according to any one of claims 32 to 39, wherein a reference signal is carried in a sub-carrier other than a sub-carrier comprised in the target TR pattern.

41. A communication apparatus, wherein the communication apparatus comprises a processor and a memory, the memory is configured to store a computer program, and the processor is configured to execute the computer program stored in the memory, so that the communication apparatus performs the method according to any one of claims 1 to 11, or the communication apparatus performs the method according to any one of claims 12 to 20.

42. A computer-readable storage medium, wherein the computer-readable storage medium stores a computer program, and when the computer program is executed by a computer, the computer is enabled to perform the method according to any one of claims 1 to 11, or the computer is enabled to perform the method according to any one of claims 12 to 20.

43. A computer program product, wherein the computer program product stores a computer program, and when the computer program is executed by a computer, the computer is enabled to perform the method according to any one of claims 1 to 11, or the computer is enabled to perform the method according to any one of claims 12 to 20.

**44.** A communication system, comprising a first device configured to perform the method according to any one of claims 1 to 11 and a second device configured to perform the method according to any one of claims 12 to 20.

FIG. 1

FIG. 2

FIG. 3

FIG. 4

FIG. 5

FIG. 6

FIG. 7

FIG. 8

FIG. 9

Carrier
bandwidth 1
TR pattern 1

Carrier
bandwidth 2
TR pattern 2

Carrier
bandwidth 3
TR pattern 3

Carrier
bandwidth 4
TR pattern 4

Frequency

PAPR
suppression
performance 1
TR pattern 11

PAPR
suppression
performance 2
TR pattern 12

PAPR suppression
performance 3
TR pattern 13

↑ TR reserved
sub-carrier

FIG. 10

EP 4 510 698 A1

Bandwidth 1

Bandwidth 2

Frequency

Sub-carriers included in a TR pattern 11

Sub-carriers included in a TR pattern 12

FIG. 11

1200

1210

1220

Processing module

Transceiver module

FIG. 12

1300

1301

1302

Processor

Memory

Instructions

Instructions

1303

1304

Transceiver

Antenna

1305

1306

FIG. 13

<div align="center">**INTERNATIONAL SEARCH REPORT**</div>

| International application No. |
| --- |
| **PCT/CN2023/089485** |

| A. | CLASSIFICATION OF SUBJECT MATTER |
| --- | --- |

H04W 28/26(2009.01)i

According to International Patent Classification (IPC) or to both national classification and IPC

| B. | FIELDS SEARCHED |
| --- | --- |

Minimum documentation searched (classification system followed by classification symbols)

IPC:H04W H04Q H04L

Documentation searched other than minimum documentation to the extent that such documents are included in the fields searched

Electronic data base consulted during the international search (name of data base and, where practicable, search terms used)

CNTXT, ENTXTC, ETSI, 3GPP, CJFD: 峰均功率比, PAPR, 抑制, 预留, 保留, reserv+, 载波, 音调, tone, TR, tone reservation, 图案, 图样, 样式, pattern, 子载波

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 104519004 A (SHANGHAI ADVANCED RESEARCH INSTITUTE, CHINESE ACADEMY OF SCIENCES) 15 April 2015 (2015-04-15) description, paragraphs 30-99 | 1-44 |
| A | WO 2014177839 A1 (SONY CORPORATION et al.) 06 November 2014 (2014-11-06) entire document | 1-44 |
| A | CN 101536446 A (TELEFONAKTIEBOLAGET LM ERICSSON CO., LTD.) 16 September 2009 (2009-09-16) entire document | 1-44 |
| A | WO 2018098692 A1 (HUAWEI TECHNOLOGIES CO., LTD.) 07 June 2018 (2018-06-07) entire document | 1-44 |
| A | CN 112291174 A (QINGDAO TOPSCOMM COMMUNICATION CO., LTD.) 29 January 2021 (2021-01-29) entire document | 1-44 |

☑ Further documents are listed in the continuation of Box C.     ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **08 May 2023** | **11 May 2023** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/089485**

| C. | DOCUMENTS CONSIDERED TO BE RELEVANT | |
|---|---|---|
| Category* | Citation of document, with indication, where appropriate, of the relevant passages | Relevant to claim No. |
| A | DIGITAL VIDEO BROADCASTING (DVB). "Frame structure channel coding and modulation for a second generation digital terrestrial television broadcasting system (DVB-T2)" <br> *ETSI EN 302 755 V1.3.1 (2012-04)*, 30 April 2012 (2012-04-30), <br> entire document | 1-44 |

Form PCT/ISA/210 (second sheet) (July 2022)

INTERNATIONAL SEARCH REPORT

Information on patent family members

International application No.

**PCT/CN2023/089485**

| Patent document cited in search report | | | Publication date (day/month/year) | Patent family member(s) | | | Publication date (day/month/year) |
|---|---|---|---|---|---|---|---|
| CN | 104519004 | A | 15 April 2015 | None | | | |
| WO | 2014177839 | A1 | 06 November 2014 | TW | 201515413 | A | 16 April 2015 |
| | | | | GB | 2513630 | A | 05 November 2014 |
| CN | 101536446 | A | 16 September 2009 | EP | 2078399 | A2 | 15 July 2009 |
| | | | | US | 2010118836 | A1 | 13 May 2010 |
| | | | | WO | 2008054310 | A2 | 08 May 2008 |
| WO | 2018098692 | A1 | 07 June 2018 | None | | | |
| CN | 112291174 | A | 29 January 2021 | None | | | |

Form PCT/ISA/210 (patent family annex) (July 2022)

43

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210524035X